# FASCICULE DE BREVET EUROPEEN

(11) **EP 3 439 954 B1**
(45) Date de publication et mention de la délivrance du brevet: **23.11.2022**
(21) Numéro de dépôt: 17719865.2
(22) Date de dépôt: 06.04.2017
(51) Int. Cl.: B64C 39/02

(54) **DISPOSITIF DE PROPULSION D'UN PASSAGER**
VORRICHTUNG ZUM ANTRIEB EINES PASSAGIERS
DEVICE FOR PROPELLING A PASSENGER

(30) Priorité: 08.04.2016 FR 1653136; 10.05.2016 FR 1654171
(43) Date de publication de la demande: 13.02.2019
(60) Demande divisionnaire: 21198135.2
(73) Titulaire: Zipair, 13740 Le Rove (FR)
(72) Inventeur: ZAPATA, Frankie, 13740 LE ROVE (FR)
(74) Mandataire: Med'inVent Consulting
(86) Numéro de dépôt international: PCT/FR2017/050829
(87) Numéro de publication internationale: WO 2017/174944

(56) Documents cités:
- WO-A1-2014/195660
- WO-A1-2015/103700
- WO-A1-2015/103700
- US-A- 2 417 896
- US-A- 2 417 896
- US-A1- 2015 360 755

## Description

L'invention concerne un dispositif de propulsion d'un passager pour que ce dernier puisse se mouvoir dans les airs avec de très grandes libertés de mouvements grâce à son agilité et son physique.

L'invention prévoit en outre que le dispositif soit très simple à mettre en œuvre et accessible au plus grand nombre.

Se déplacer aussi librement que possible dans l'espace est une préoccupation constante pour l'Homme, voire un rêve quasi-inaccessible pour certains. De nombreuses machines ont été élaborées, de la plus sommaire à la plus sophistiquée, pour parvenir à assouvir cet objectif avec plus ou moins de succès.

Ainsi, pour tenter de se mouvoir à la surface de l'eau ou au sein d'un environnement parfois hostile, un dispositif de propulsion a été élaboré dans les années soixante du siècle dernier, tel que décrit dans les documents US 3,243,144 ou US 3,381,917. Un tel dispositif comporte un corps sous la forme d'un harnais ou d'un siège contre lequel ou dans lequel un passager peut prendre place. Un tel corps coopère avec un groupe de poussée, sous la forme notamment d'une paire de tuyères, pour éjecter un fluide sous pression et ainsi générer une force de poussée suffisante pour sustenter le passager dans les airs. Pour simplifier le vol du passager et en diminuer l'effort physique, les tuyères sont clairement disposées au-dessus du centre de gravité de l'ensemble corps-passager, plus précisément au niveau des épaules dudit passager. Le groupe de poussée comporte en outre une station de compression d'un fluide alimentée en gaz ou en liquide(s) inflammable(s) et positionnée dans le dos du passager.

Cette station est apte à suffisamment alimenter les tuyères pour provoquer le décollage du passager, transformé en quelque sorte en une fusée humaine. La faible autonomie et la dangerosité de tels dispositifs ont maintenu ceux-ci dans une relative confidentialité.

Plus récemment, un dispositif, tel que décrit dans les documents US 7,258,301 ou US 2008/0014811 A1, s'inspire de cet enseignement en l'adaptant pour en réduire la dangerosité. La station de compression est à présent distante. En outre, le fluide sous pression est de l'eau comprimée par turbinage, s'inspirant en cela notamment d'expériences visant à exploiter de l'eau comprimée pour diminuer l'effort physique d'un plongeur sous-marin, comme le suggère le document US 3,277,858. Les documents US 7,258,301 ou US 2008/0014811 A1 proposent ainsi un dispositif de propulsion aérien, similaire à son aîné, adapté afin que l'eau sous pression soit acheminée depuis une station de compression distante au moyen d'un conduit d'alimentation tel qu'une lance à incendie. La configuration des tuyères, ainsi que les moyens permettant d'orienter lesdites tuyères pour déterminer la trajectoire du dispositif, sont volontairement conservés pour maintenir une certaine facilité de pilotage du passager. Les phases de décollage notamment nécessitent toutefois une position initiale du passager en station debout, les pieds sur un support solide. L'effort physique du passager, réduit à sa plus simple expression pour se mouvoir, vient au détriment de la liberté et de la variété des mouvements et des déplacements à la surface de l'eau, voire sous la surface de celle-ci. En outre un tel système « dispositif + station » selon le document US 7,258,301 présente un coût élevé lié à la conception du dispositif comportant des tuyères articulées et à la conception d'une station de compression dédiée. Le fait de pouvoir se déplacer dans l'espace présente en soi un côté ludique. Toutefois, la configuration des tuyères, situées au-dessus du centre de gravité du dispositif, donne l'impression au passager d'être suspendu au niveau des épaules par un crochet de grue virtuel et prive ainsi celui-ci de nombreuses sensations provoquées par des chutes, des figures de styles improvisées ou acrobatiques. Par ailleurs, la variété des directions et des déplacements est limitée. Il n'est pas facile par exemple de se mouvoir « en crabe » avec un dispositif connu, voire de passer instantanément d'une trajectoire rectiligne à la surface de l'eau à une phase de plongée suivie de déplacements multiples sous la surface de l'eau.

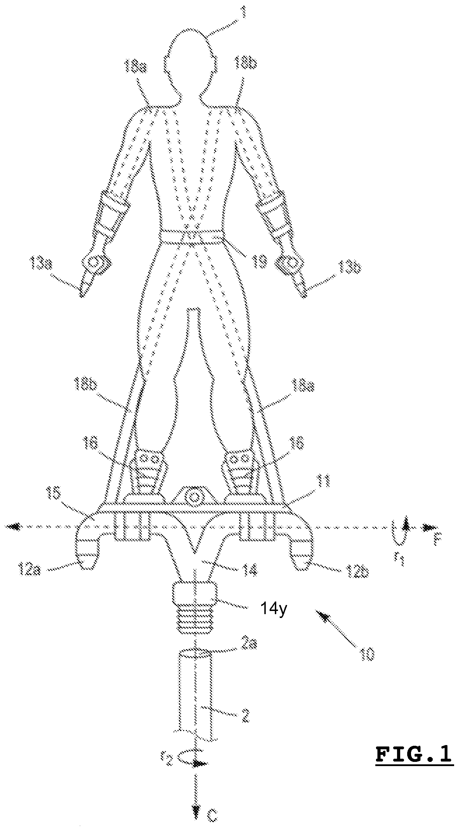

Pour résoudre grandement ces inconvénients, un dispositif particulièrement efficace, connu sous l'appellation « Flyboard » a été développé. Il est décrit notamment dans le document US 8,336,805, et rencontre un succès planétaire. La figure 1 présente ainsi un mode de réalisation d'un tel dispositif de propulsion 10. Ce dispositif 10 comporte un corps principal sous la forme d'une plateforme 11 sensiblement plane sur laquelle un passager 1 peut prendre place. Le dispositif de propulsion, décrit en liaison avec la figure 1, comporte un groupe de poussée coopérant avec la plateforme 11. Un tel groupe de poussée consiste en une paire de tuyères principales 12a et 12b fixées contre la face inférieure de la plateforme 11. Selon la figure 1, le groupe de poussée d'un tel dispositif peut comporter en outre deux tuyères secondaires 13a et 13b pour faciliter sa maniabilité. Celles-ci sont libres et destinées à être éventuellement et respectivement tenues par un passager 1 au niveau des avant-bras ou des mains. Pour délivrer une force de poussée suffisante et permettre un envol puis un déplacement, le dispositif 10 comporte en outre des moyens pour collecter et distribuer un fluide sous pression, par exemple de l'eau, aux tuyères principales et secondaires. Un tel fluide est préférentiellement acheminé au moyen d'un conduit d'alimentation souple 2 depuis une station de compression distante, non représentée sur la figure 1. Un tel conduit d'alimentation peut être réalisé à partir d'une manche à incendie ou de tous autres matériaux présentant la résistance nécessaire à la pression exercée par le fluide sous pression. Un collecteur 14y peut ainsi présenter une base 14c à laquelle est connecté un embout 2a d'un conduit d'alimentation 2, par exemple au moyen d'une cannelure adaptée pour recevoir ledit conduit 2. Selon la figure 1, le collecteur 14y peut présenter une forme proche d'un « Y » pour collecter depuis la base 14c et distribuer via des bras le fluide sous pression respectivement aux tuyères principales 12a et 12b. Le collecteur 14y est connecté aux tuyères principales ou par l'intermédiaire d'un coude éventuel 15, afin d'orienter les tuyères principales selon un axe sensiblement perpendiculaire à la face inférieure de la plateforme 11. Les bras sont connectés auxdites tuyères principales, via ledit coude 15, selon une liaison pivot au niveau des bras. Un tel agencement permet une libre rotation suivant un axe F sensiblement parallèle aux bras du collecteur 14y. Ainsi, ledit collecteur peut décrire une quasi-libre rotation r1 autour dudit axe F, modulo la butée que représente la face inférieure de la plateforme 11 lors d'une inclinaison excessive de cette dernière. En outre, une telle liaison pivot permet à l'utilisateur de « décoller » aisément de la surface de l'eau et lui confère une grande capacité d'orientation et de mouvement. Une rotation r1 relative du collecteur autour de l'axe F au regard du plan de la face inférieure de la plateforme 11, rotation consécutive de la liaison du collecteur avec le conduit d'alimentation 2, n'entraîne pas de rotation de la plateforme 11. L'embout 2a du conduit d'alimentation 2 peut avantageusement coopérer avec le collecteur 14y au niveau de sa base 14c selon une liaison pivot pour permettre une libre rotation r2 autour d'un axe C sensiblement parallèle au conduit 2. Le dispositif peut ainsi librement pivoter autour dudit axe C sans engendrer de boucles ou de contraintes excessives sur le conduit d'alimentation 2.

Pour distribuer le fluide sous pression aux tuyères secondaires 13a et 13b, à titre d'exemple et comme l'indique la figure 1, des conduits secondaires 18a et 18b - sous la forme avantageuse de tuyaux souples - peuvent être prévus pour délivrer depuis le collecteur 14y ledit fluide sous pression aux tuyères secondaires. Pour ne pas gêner le passager 1, lesdits conduits secondaires peuvent être guidés le long du dos jusqu'aux épaules par l'utilisation de moyens de maintien 19, tels que des sangles, des harnais, etc. Un passager peut en outre utiliser des moyens pour contraindre les tuyères secondaires au niveau de ses avant-bras.

La plateforme 11 peut présenter des moyens de maintien d'un passager sur la face supérieure de ladite plateforme 11. Ainsi selon la position préférée d'un passager sur la plateforme, lesdits moyens de maintien peuvent consister - comme l'indique la figure 1 - en une paire de chaussons, de sangles de pied, également connues sous l'appellation anglo-saxonne « Foot Straps », ou de bottes de fixation 16 d'un type similaire à ce que l'on peut trouver, par exemple, dans la pratique du wakeboard.

Un dispositif de propulsion, tel que le dispositif 10 décrit en liaison avec la figure 1, peut être alimenté par toute station de compression de fluide à partir du moment où celle-ci est apte à délivrer un fluide dont la pression est suffisante pour assurer le fonctionnement du dispositif de propulsion. Celle-ci peut être distante et dédiée à cet usage au risque d'augmenter le coût global d'un système de propulsion comportant un dispositif de propulsion, une station de compression et un conduit d'alimentation coopérant avec lesdits dispositif et station pour acheminer le fluide sous pression. Une telle station peut, en variante, consister à utiliser un véhicule nautique à moteur (ci-après désigné « VNM ») adapté, tel que décrit dans le document WO2013/041787A1, pour diminuer les coûts.

La figure 1 décrit préférentiellement un système dans lequel le fluide utilisé est de l'eau sous pression pour se mouvoir à la surface de l'eau. Bien que le dispositif de propulsion décrit en liaison avec la figure 1 permette de se mouvoir facilement dans et/ou à la surface de l'eau et propose à son utilisateur de très grands degrés de liberté pour réaliser un grand nombre de figures, il peut présenter, pour certains, quelques inconvénients.

A l'instar du dispositif précédent, les tuyères sont alimentées en fluide compressé, notamment de l'eau, acheminé au dispositif au moyen d'un conduit via un collecteur, reliant ledit dispositif à une station de compression de fluide avantageusement distante. Une telle solution fonctionne particulièrement bien au-dessus, voire en-dessous, de la surface d'une étendue d'eau. Ainsi, une station de compression flottante sur ladite étendue d'eau, par un exemple un véhicule nautique à moteur adapté pour coopérer avec ledit conduit à la sortie de fluide, collecte de l'eau, la comprime par turbinage et la délivre via le conduit.

Pour évoluer à la surface de la mer mais aussi à la surface de la terre, voire même sans être entravé par un conduit acheminant un fluide comprimé et ainsi s'élever grandement en altitude, outre les solutions expérimentales évoquées précédemment en lien avec les documents US 3,243,144 ou US 3,381,917 selon lesquels un passager coopère avec un harnais muni de tuyères positionnées sensiblement à la hauteur des épaules dudit passager et alimentées en rejet gazeux délivré par combustion d'un carburant inflammable contenu dans un réservoir au dos dudit passager, d'autres acteurs ont développé des solutions demeurées confidentielles pour certaines, car ces dernières n'étaient pas en adéquation avec un éventuel marché ou requéraient des conditions d'utilisation qui réservaient ladite solution à quelques privilégiés. Ainsi, nous pouvons mentionner le dispositif évoqué dans le document US 4,447,024 comprenant une nacelle à bord de laquelle peut prendre place un passager. Ladite nacelle comprend en son sein un réacteur ou « jet engine » selon une terminologie anglo-saxonne, sensiblement positionné le long des jambes du passager. Une telle solution est très volumineuse et peu mobile. En effet, la nacelle est très enveloppante et les dimensions du réacteur imposantes. Un tel enseignement technique ne s'est jamais imposé comme une solution adaptée au plus grand nombre et demeure par conception impropre au loisir et acrobaties. A l'opposé, certains ont développé une aile volante comportant, à l'instar d'un avion, des réacteurs. Une telle aile dont l'envergure est sensiblement celle de la hauteur d'un humain se positionne à l'aide d'un harnais sur le dos de son pilote. Ce dernier se mue ainsi en carlingue d'avion. Toutefois, un tel dispositif est clairement adapté à des déplacements rectilignes et nécessite que le passager muni de son aile soit lâché d'un aéronef, par exemple un avion ou un hélicoptère. Il n'est pas possible en effet de décoller du sol et de réaliser des figures à proximité du sol. L'atterrissage requiert en outre un parachute.

Le document WO2015103700 concerne un véhicule volant personnel comprenant un ensemble de base formant plate-forme qui fournit une surface sur laquelle une personne se tenant debout sans aide peut positionner ses pieds, et comprenant plusieurs systèmes de propulsion à flux axial disposés autour d'une périphérie de l'ensemble de base formant plate-forme. Les systèmes de propulsion génèrent un flux de poussée dans une direction sensiblement perpendiculaire à la surface de l'ensemble de base formant plate-forme, à l'endroit où le flux de poussée n'est pas gêné par l'ensemble de base formant plate-forme. Le flux de poussée a une intensité suffisante pour permettre des manœuvres de décollage et d'atterrissage verticaux, de vol, de vol stationnaire et de déplacement. Le véhicule permet au pilote de commander l'orientation spatiale de l'ensemble de base formant plate-forme par le déplacement, de préférence direct, d'au moins une partie de son corps, et le déplacement spatial du véhicule est ainsi commandé.

En résumé, il n'existe à ce jour aucune solution technique et réaliste proposant des capacités de mobilité similaires à celles d'un Flyboard, un très faible encombrement et proposant à son pilote ou passager des opportunités en matière d'acrobaties quasiment sans limites, de déplacements à la surface terrestre à hautes ou faibles vitesses et à grandes précisions, le tout pour un budget restreint permettant d'envisager un déploiement en masse.

L'invention permet d'atteindre un tel objectif, résolvant ainsi les inconvénients des solutions connues. De nouvelles perspectives en matière de déplacement de passager et de distraction sont ainsi à la portée de tous. Seule l'autonomie reste à être éventuellement augmentée selon l'application envisagée. L'essor des technologies, notamment en termes de propulseurs ou de batteries, ne fera que confirmer la pertinence d'un dispositif de propulsion d'un passager conforme à l'invention. En outre, l'invention s'applique à différentes configurations de plateforme pour véhiculer un ou plusieurs passagers et permet d'offrir des nouvelles modalités de transport à tout passager, quelle que soit l'agilité de ce dernier, qu'il soit à la recherche de défis physiques ou de sensations fortes ou encore en demande de confort à l'instar d'un passager ou conducteur d'une motocyclette ou automobile.

Parmi les nombreux avantages procurés par l'invention, nous pouvons mentionner que :
- le pilotage d'un dispositif conforme à l'invention est particulièrement intuitif ; plus particulièrement et à titre d'exemple non limitatif, le pilotage d'un tel dispositif selon un premier mode de réalisation est très similaire à celui d'un Flyboard qui constitue à ce jour une référence en terme de maniabilité ;
- l'agencement d'un dispositif selon l'invention, quel que soit sa configuration ou son agencement, maintient celui-ci opérationnel, quand bien même le groupe de poussée soit partiellement défaillant, préservant ainsi la sécurité du pilote et d'éventuels passagers ;
- selon les modes de réalisation d'un dispositif conforme à l'invention et des accessoires que l'on peut y associer, il est possible d'accroître aisément l'autonomie dudit dispositif et ainsi la durée et/ou la distance de vol ;
- la conception d'un tel dispositif permet un décollage et un atterrissage à partir ou sur une aire particulièrement réduite, de l'ordre d'un à quelques mètres carrés.

A cette fin, il est prévu tout d'abord un dispositif de propulsion d'un passager, ledit dispositif comprenant un corps comportant une plateforme comportant plusieurs plages agencées pour accueillir les pieds ou chaussures dudit passager et un groupe de poussée. Pour qu'un tel dispositif soit particulièrement exploitable notamment dans des activités ludiques :
- ledit groupe de poussée comprend au moins un sous-groupe de poussée comprenant chacun au moins un turboréacteur ;
- la direction d'éjection de flux gazeux de chaque dudit au moins un turboréacteur est orientable suivant un axe sensiblement normal à la plateforme ;
- ledit corps du dispositif comporte des moyens supports du groupe de poussée coopérant avec la plateforme et étant agencés pour soutenir ledit groupe de poussée et minimiser la distance entre un axe projeté dans un plan médian de la plateforme et passant par le centre de gravité du corps du dispositif de propulsion et ladite direction d'éjection de flux gazeux de chaque dudit au moins un turboréacteur ;
- les plages pour accueillir les pieds ou chaussures dudit passager sont positionnées de part et d'autre dudit groupe de poussée.

Le au moins un sous-groupe de poussée peut comporter un premier et un deuxième turboréacteurs. Les directions d'éjection de flux gazeux du premier et du deuxième turboréacteurs sont normales à la plateforme.

Les plages pour accueillir les pieds ou chaussures du passager peuvent comporter des moyens de maintien sous la forme de repose-pieds ou d'une paire de chaussons ou de bottes de fixation.

Pour protéger le groupe de poussée d'un tel dispositif de propulsion, le corps de ce dernier peut comporter des moyens saillants coopérant avec la plateforme et agencés pour prévenir tout choc ou contact direct entre le sol et le groupe de poussée du dispositif.

Avantageusement, afin de ne pas altérer l'évolution du dispositif de propulsion, le premier et le deuxième turboréacteurs du au moins sous-groupe de poussée peuvent être agencés contrarotatifs.

Les moyens supports peuvent être agencés pour maintenir parallèles le premier et le deuxième turboréacteurs du au moins un sous-groupe de poussée.

Pour préserver l'intégrité physique du passager, un dispositif de propulsion selon l'invention peut comporter un carénage, coopérant avec la plateforme ou constituant avec ladite plateforme une même entité physique, agencé pour prévenir tout contact direct entre le groupe de poussée et le passager.

En complément, ledit carénage peut comporter une grille agencée pour occulter partiellement l'entrée de fluide du au moins un turboréacteur du au moins un sous-groupe de poussée et prévenir ainsi l'aspiration de corps étrangers par ladite entrée de fluide.

Afin de pouvoir aisément piloter le dispositif de propulsion, notamment selon des trajectoires courbes, le groupe de poussée peut comporter des propulseurs secondaires correcteurs de cap et/ou d'assiette.

Pour alimenter le groupe de poussée d'un dispositif de propulsion selon l'invention, ce dernier peut avantageusement comprendre en outre un réservoir d'un carburant en communication fluidique avec le au moins un turboréacteur du au moins un sous-groupe de poussée pour alimenter ledit au moins un turboréacteur en carburant, ledit réservoir coopérant avec le corps du dispositif de propulsion ou le corps du passager.

Pour que ledit passager puisse piloter son dispositif de propulsion, ce dernier peut comporter une interface homme-machine de consignes traduisant une gestuelle du passager en une consigne, des moyens de traitement de ladite consigne produite et de génération d'une commande de puissance du au moins un turboréacteur du au moins un sous-groupe de poussée à partir de ladite consigne produite, ladite commande de puissance dudit au moins un turboréacteur du au moins un sous-groupe de poussée étant acheminée au groupe de poussée par des moyens de communication.

En complément, les moyens de traitement peuvent générer une commande de puissance des propulseurs secondaires correcteurs de cap et/ou d'assiette à partir de ladite consigne produite par l'interface homme-machine de consignes. Ladite commande de puissance des propulseurs secondaires correcteurs de cap et/ou d'assiette est acheminée par des moyens de communication.

Un tel dispositif de propulsion peut en outre comporter un capteur d'assiette et/ou de trajectoire coopérant avec le corps du dispositif sensiblement à la position du centre de gravité de ce dernier et avec les moyens de traitement, ces derniers générant la commande de puissance du au moins un turboréacteur du au moins un sous-groupe de poussée ou des propulseurs secondaires correcteurs de cap et/ou d'assiette à partir d'une information délivrée par le capteur d'assiette et/ou de trajectoire conjointement avec une consigne produite par l'interface homme-machine.

En variante ou en complément, ladite interface homme-machine de consignes peut comporter un capteur de mesure angulaire mesurant l'angle décrit par un poignet du passager au regard de l'axe longitudinal de l'avant-bras concerné par rapport à une position de référence selon laquelle la main du passager est alignée avec ledit avant-bras.

Pour que le passager puisse véhiculer lui-même ledit réservoir d'un carburant à l'instar d'un sac à dos, un tel réservoir peut comporter une enveloppe souple et un harnais pour coopérer avec le corps du passager dont les attaches sont prévues pour être désolidarisées aisément par ledit passager en situation d'urgence.

D'autres caractéristiques et avantages apparaîtront plus clairement à la lecture de la description qui suit et à l'examen des figures qui l'accompagnent parmi lesquelles :
- la figure 1, déjà décrite, présente un dispositif de propulsion d'un passager exploitant un fluide compressé par une station de compression distante selon l'art antérieur ;
- les figures 2A, 2B, 2C, 2D, 2E et 2F décrivent un premier exemple de réalisation d'un dispositif de propulsion d'un passager conforme à l'invention dont les dimensions de la plateforme sont proches de celles de la plateforme d'un dispositif décrit en lien avec la figure 1 ;
- les figures 3A, 3B, 3C, 3D, 3E et 3F décrivent un deuxième exemple de réalisation d'un dispositif de propulsion d'un passager conforme à l'invention dont les dimensions de la plateforme sont proches de celles d'un châssis d'une motocyclette terrestre ;
- la figure 4 présente un schéma très simplifié de la configuration d'un groupe de poussée d'un troisième exemple de réalisation d'un dispositif de propulsion conforme à l'invention dont la configuration de la plateforme est sensiblement proche de celle d'un châssis d'une automobile terrestre ;
- la figure 5 décrit un exemple de réalisation d'une interface homme-machine pour transmettre des consignes issues du passager à l'organe de contrôle du groupe de poussée d'un dispositif conforme à l'invention.

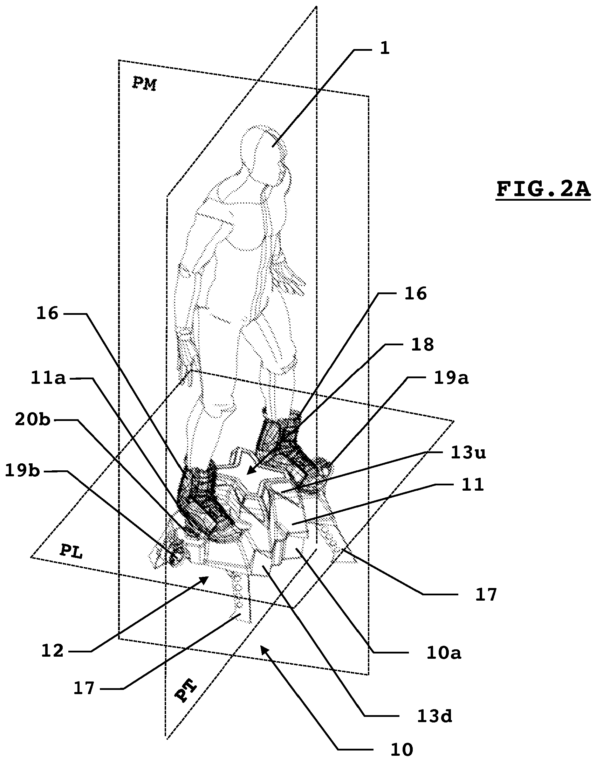

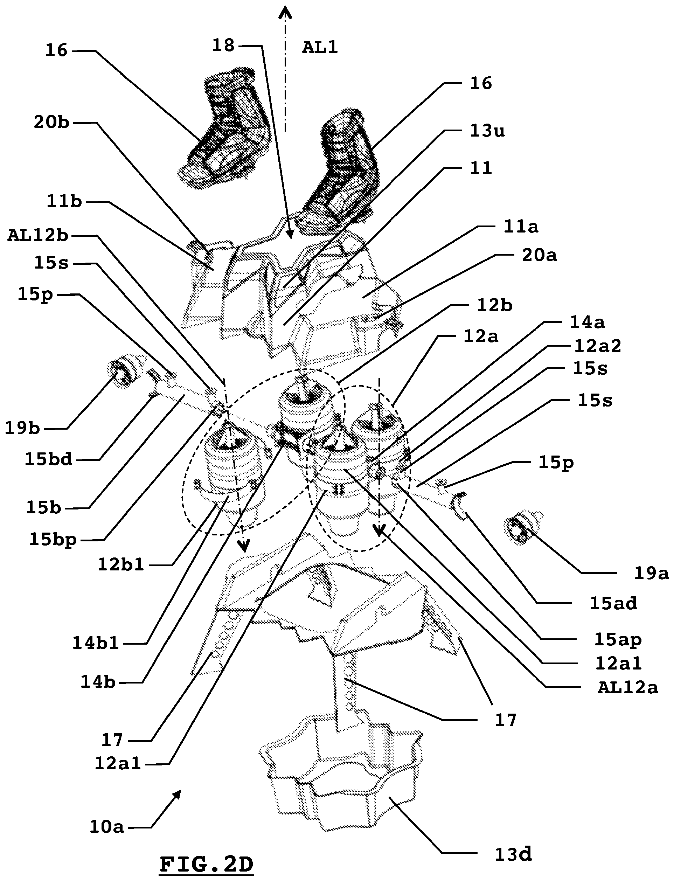

La figure 2A présente une vue en perspective d'un premier mode de réalisation préféré d'un dispositif de propulsion 10 d'un passager 1 selon l'invention. Un tel dispositif 10 comporte un corps principal 10a sous la forme principalement d'une plateforme 11 sur laquelle un passager 1 peut prendre place. Selon les dimensions de la plateforme 11 et la puissance du groupe de poussée 12 du dispositif 10, l'invention prévoit que plusieurs passagers puissent éventuellement prendre position simultanément sur ladite plateforme 11. La plateforme 11 présente, à ce titre, une ou plusieurs plages 11a agencées pour accueillir les pieds ou chaussures du passager 1, comme l'indique plus distinctivement notamment la figure 2D.

L'invention prévoit que de telles plages 11a puissent comporter des moyens de maintien 16 du passager 1 sur la plateforme 11. Ainsi, selon la position souhaitée par ledit passager 1 sur la plateforme 11 d'un dispositif 10 conforme à l'invention, lesdits moyens de maintien 16 peuvent consister en une paire de chaussons ou de bottes de fixation d'un type similaire à ce que l'on peut trouver, par exemple, dans la pratique du wakeboard. D'autres types de moyens de maintien pourraient être préférés, selon que l'on souhaite maintenir un passager en position « jambes fléchies », à genoux, voire encore assis.

Une telle plateforme 11 peut être avantageusement réalisée à partir d'un ou plusieurs matériaux présentant, seul ou en combinaison, une rigidité suffisante pour soutenir le poids du ou des passagers et prévenir ainsi toute déformation excessive.

Le corps 10a du dispositif de propulsion 10 décrit en liaison avec les figures 2A et 2D comporte un groupe de poussée 12 coopérant avec la plateforme 11.

Dans la suite du document, nous entendrons par:
- « plan médian » PM, tout plan normal notamment à la plateforme 11, qui sépare une moitié bâbord d'une moitié tribord du corps 10a du dispositif 10, lesdites moitiés n'étant pas nécessairement égales ;
- « plan transversal » PT, tout plan normal à un plan médian, qui sépare le corps 10a du dispositif de propulsion 10 en deux moitiés, l'une comportant l'avant, et l'autre comportant l'arrière dudit corps, lesdites moitiés n'étant pas nécessairement égales ;
- « plan longitudinal » PL, tout plan normal à des plans transversal et médian, ledit plan longitudinal séparant une moitié supérieure d'une moitié inférieure du corps 10a du dispositif 10, lesdites moitiés n'étant pas nécessairement égales.

De tels plans PM, PT, PL sont illustrés en lignes pointillées sur la figure 2A. De la même manière, nous nommerons :
- « axe transversal », tout axe appartenant à la fois à un plan transversal et un plan longitudinal ;
- « axe longitudinal », tout axe appartenant à la fois à un plan médian et un plan longitudinal ;
- « axe médian », tout axe appartenant à la fois à un plan médian et un plan transversal.

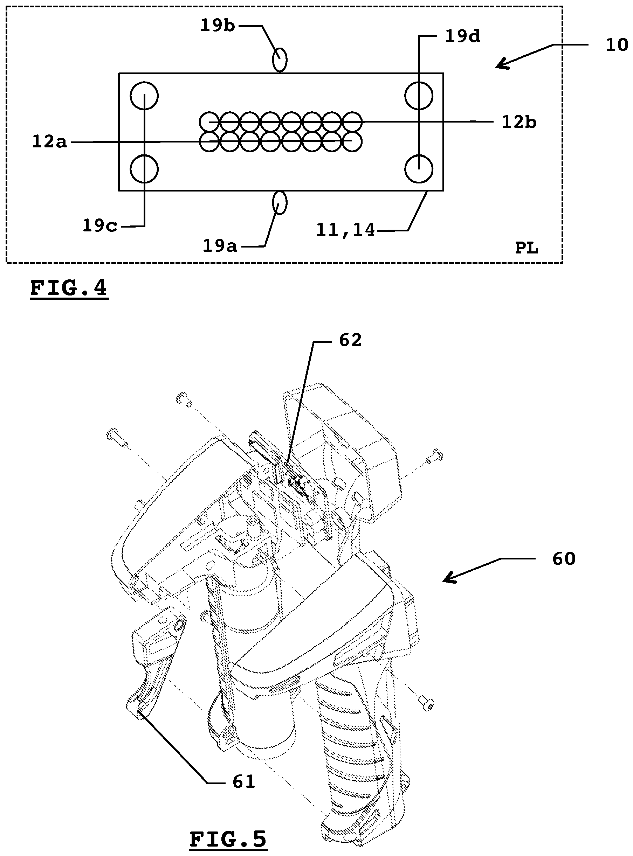

Un dispositif de propulsion 10 conforme à l'invention comporte d'autres éléments accessoires, non représentés par mesure de simplification en figure 2A, comme un réservoir de carburant pour alimenter le groupe de poussée 12 ou encore une interface homme-machine, de type télécommande par exemple, pour que le passager 1 puisse interagir avec le groupe de poussée 12 dudit dispositif 10. Une telle interface homme-machine sera décrite en liaison avec la figure 5.

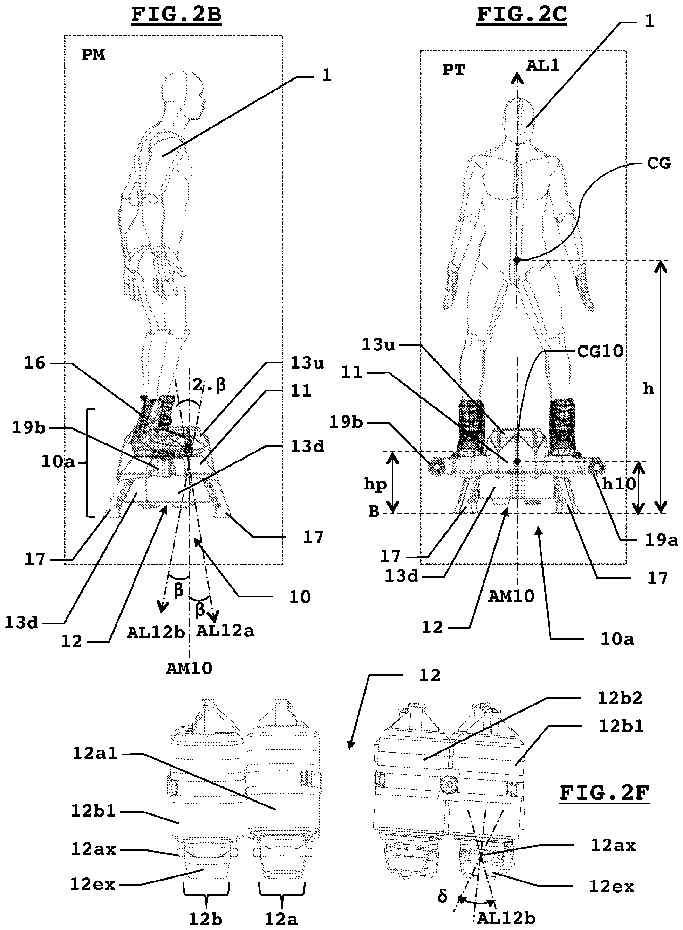

Les figures 2B, 2C et 2D décrivent un tel premier dispositif de propulsion 10 selon l'invention, respectivement de profil et de face. Un tel dispositif a des dimensions très proches de celles d'un Flyboard présenté, à titre d'exemple antérieur en liaison avec la figure 1. Nous pouvons remarquer à la lumière des figures 2A, 2B et 2C, que le corps 10a d'un tel dispositif 10 comporte des moyens saillants 17, avantageusement et éventuellement escamotables en vol, coopérant avec la plateforme 11 et agencés pour prévenir tout choc ou contact direct entre le sol et le groupe de poussée 12 du dispositif 10. De tels moyens 17 peuvent consister notamment en quatre pieds de longueurs suffisantes pour que la ou les tuyères d'éjection du groupe de poussée 12 ne puissent heurter le sol et pour offrir également une certaine stabilité, lorsque le dispositif est sur le sol ou sur une station de décollage, non représentée en figures 2A à 2C, afin que le passager puisse prendre efficacement position sur la plateforme 11. En variante, de tels moyens 17 pourraient consister en une paire de skis ou tous autres éléments aptes à assurer une certaine stabilité selon la nature du sol ou du support du dispositif.

La figure 2D présente une vue éclatée d'un corps 10a d'un tel dispositif 10 conforme à l'invention.

Comme l'indique ladite figure 2D et à titre d'exemple non limitatif, contrairement aux dispositifs connus, le groupe de poussée 12 consiste avantageusement en une paire de sous-groupes de poussée 12a et 12b comprenant chacun deux propulseurs. Ainsi, un premier sous-groupe de poussée 12a comporte deux propulseurs 12a1 et 12a2. Il en est de même pour le sous-groupe de poussée 12b qui comporte deux propulseurs 12b1 et 12b2. En variante, de tels sous-groupes pourraient comporter plus de deux propulseurs. Selon une deuxième variante, le groupe de poussée 12 pourrait comporter davantage de sous-groupes de poussée, eux-mêmes comprenant un ou plusieurs propulseurs. L'exemple de configuration décrit en liaison avec la figure 2D, bien que ne limitant pas l'invention, présente des qualités certaines au regard d'autres configurations de groupe de poussée. En effet, un dispositif 10 pourrait évoluer avec un groupe de poussée réduit à un seul propulseur, par exemple de type turboréacteur thermique. Toutefois, cette configuration présenterait un encombrement trop imposant pour permettre au passager 1 de pouvoir évoluer aisément comme s'il évoluait sur un Flyboard. En effet, la longueur d'un tel propulseur unique, afin que ce dernier soit en mesure de délivrer une poussée suffisante pour propulser dans l'air le dispositif 10 et son passager 1, serait de l'ordre d'un mètre, voire plus. De la même manière, nous pourrions imaginer un groupe de poussée 12 comportant deux sous-groupes ne comprenant qu'un propulseur chacun. L'encombrement de chaque propulseur serait réduit, mais un tel groupe de poussée 12 conserverait un inconvénient majeur en terme de sécurité, à l'instar de la configuration mono-propulseur précédemment exprimée. En effet, si l'un des deux propulseurs venait à dysfonctionner, la poussée totale du groupe serait insuffisante pour maintenir le passager 1 dans les airs et pour conserver une manœuvrabilité suffisante.

Contrairement à ces deux configurations possibles, une configuration, telle qu'illustrée en liaison avec la figure 2D, selon laquelle un groupe de poussée 12 comprend au moins deux sous-groupes de poussée 12a et 12b comprenant chacun au moins deux propulseurs 12a1 et 12a2 pour l'un et 12b1 et 12b2 pour l'autre, offre un compromis particulièrement intéressant.

Ainsi, l'encombrement occasionné par les quatre propulseurs, par exemple des réacteurs, demeure tout à fait compatible avec les modalités d'utilisation recherchées. D'autre part, le dispositif de propulsion 10 demeure parfaitement manœuvrable, quand bien même l'un des propulseurs venait à dysfonctionner.

Pour offrir des conditions de manœuvrabilité proches de celles d'un Flyboard, les propulseurs du groupe de poussée 12 sont avantageusement positionnés le plus au centre possible du corps 10a du dispositif 10. Ainsi, comme l'indiquent les figures 2C et 2D, les plages 11a agencées sur la plateforme 11 pour accueillir les pieds ou chaussures du passager 1 sont positionnées de part et d'autre dudit groupe de poussée 12. On réduit ainsi le moment d'inertie que le passager doit vaincre pour modifier, à l'aide de son corps, l'assiette du dispositif 10 et ainsi se mouvoir :
- droit avant, si ce dernier met le poids de son corps vers l'avant du dispositif 10 ;
- en arrière, si ce ledit passager 1 met le poids de son corps vers l'arrière du dispositif 10 ;
- en diagonale avant, si ledit passager 1 met le poids de son corps vers l'avant du dispositif 10 et sur l'un des côtés de ce dernier ;
- en diagonale arrière, si ledit passager 1 met le poids de son corps vers l'arrière du dispositif 10 et sur l'un des côtés de ce dernier.

Pour pouvoir pivoter notamment aisément et évoluer en courbes, le groupe de poussée 12 peut avantageusement comporter deux propulseurs secondaires 19a et 19b correcteurs de cap. Ces derniers sont avantageusement disposés de manière excentrée selon un axe transversal de la plateforme. En étant actionnés de manière non simultanée, ces propulseurs créent respectivement un couple suffisant pour entraîner une trajectoire courbe. En variante ou en complément, afin de s'affranchir de l'emploi de tels propulseurs secondaires, l'invention prévoit de pouvoir adjoindre à tout ou partie des propulseurs du ou des sous-groupes de poussée 12a, 12b une sortie de fluide orientable, de type cône orientable d'une sortie de fluide d'un jet ski par exemple, qui coopèrerait avec la tuyère d'éjection du flux gazeux du ou des propulseurs concernés, selon une ou des liaisons mécaniques respectives adaptées, telles que par exemple des liaisons pivot ou encastrement.

Les différents propulseurs du groupe de poussée sont maintenus et soutenus par des moyens supports 14, dont un exemple de structure sera décrit ultérieurement. Ces moyens 14 constituent l'équivalent fonctionnel d'un châssis soutenant la plateforme 11 et coopérant selon une liaison mécanique avantageuse ne présentant pas de degré de liberté ou liaison encastrement avec les moyens saillants 17, conférant une assise et une protection du groupe de poussée 12 d'un tel dispositif 10.

En liaison avec l'exemple de réalisation décrit par la figure 2D, le corps 10a d'un dispositif de propulsion 10 selon l'invention peut comporter un carénage 13u, éventuellement sous la forme d'un ou plusieurs éléments de carénage solidaires les uns par rapport aux autres, coopérant avec la plateforme 11 et/ou les moyens supports 14, par toute liaison mécanique encastrement réversible ou irréversible (soudure, vissage, par exemple) ou constituant avec ladite plateforme 11 et/ou moyens supports 14 une même entité physique. La fonction d'un tel carénage 13u est de prévenir tout contact direct entre le groupe de poussée 12 et le passager 1. La morphologie (dimensions, forme) d'un tel carénage 13u sera ainsi agencée pour s'adapter aux dimensions du groupe de poussée 12, conférer une esthétique et/ou soigner l'aérodynamisme du dispositif de propulsion, tout en limitant toute gêne pour le passager. Il est en effet précieux de pouvoir limiter tout contact entre le passager et le groupe de poussée pour prévenir tout risque de blessure de ce dernier, la température des parois extérieures du groupe de poussée 12 pouvant rapidement être très élevée. En outre, la partie supérieure du corps 10a du dispositif 10, sensiblement localisée entre les pieds du passager 1 comporte une entrée de fluide 18, en l'espèce une entrée d'air, pour alimenter en fluide les propulseurs via les entrées de fluide respectives de ces derniers. Les propulseurs comportent en effet des rotors susceptibles de blesser le passager 1 si celui-ci insère une main dans l'entrée de fluide 18 par inadvertance. D'autre part, l'aspiration d'éléments étrangers (feuilles, débris, volatiles, etc.) par ladite entrée de fluide 18 pourrait altérer le fonctionnement du groupe de poussée 12. A ce titre, ledit carénage 13u peut avantageusement comporter une grille, non représentée en figure 2D, dont la configuration permet d'occulter partiellement ladite entrée 18 et ainsi limiter ou prévenir l'aspiration de corps étrangers par ladite entrée d'air 18, tout en préservant l'échange fluidique entre le monde extérieur et les propulseurs. La figure 2D décrit en outre l'exploitation d'un carénage inférieur 13d, coopérant au moyen de toute liaison mécanique encastrement, assurant également une fonction de protection du passager ou de l'environnement proche des sorties de fluides ou tuyères d'éjection de gaz des propulseurs des sous-groupes de poussée 12a et 12b. En effet, la température peut être particulièrement haute à proximité directe desdites tuyères d'éjection. Un tel carénage ouvert permet d'offrir une protection circonférentielle ou latérale. A l'instar du carénage 13u, que nous pourrions qualifier de carénage supérieur, la géométrie d'un tel carénage 13d peut en outre être avantageusement déterminée pour ne pas altérer l'éjection gazeuse du groupe de poussée et améliorer l'aérodynamisme du corps 10a du dispositif 10. Le choix du ou des matériaux prévus pour constituer de tels éléments de carénage 13u et 13d sera fonction de la température maximale du groupe de poussée 12 à proximité directe desdits éléments de carénage, afin que celle-ci n'altère pas la structure de ces derniers.

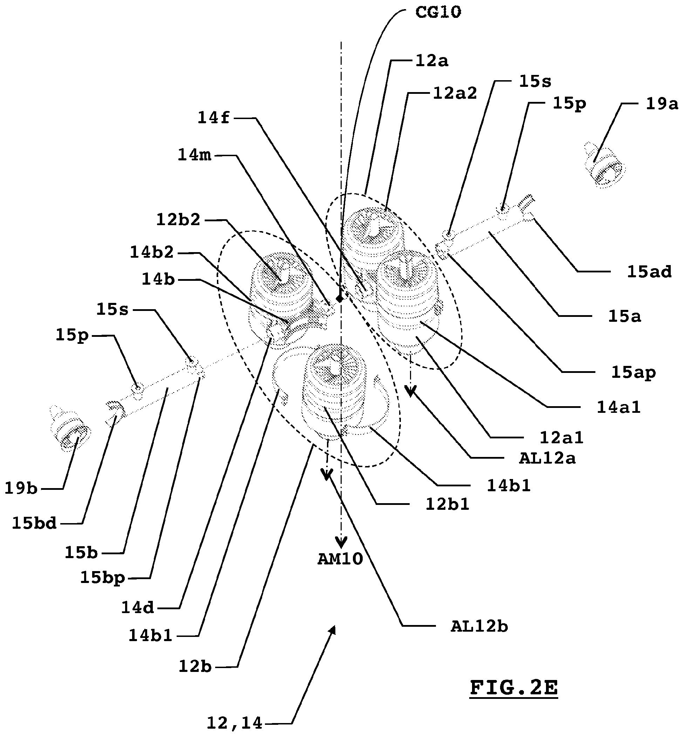

La figure 2D décrit par ailleurs la présence de propulseurs secondaires correcteurs de cap 19a et 19b localisés de manière latérale et non centrale, contrairement aux sous-groupes de poussée 12a et 12b. Nous décrirons l'apport de tels propulseurs secondaires en liaison avec la présentation détaillée d'un exemple de groupe de poussée illustré par la figure 2E.

La figure 2D ne décrit pas la majorité des éléments électroniques par mesure de simplification. A titre d'exemple, comme nous le verrons dans la description du groupe de poussée 12 en liaison avec la figure 2E, le corps 10a d'un dispositif de propulsion 10 conforme à l'invention comporte ou coopère avec des moyens de traitement de consignes du passager pour piloter la puissance des propulseurs. Par ailleurs, de tels moyens de traitement peuvent en outre coopérer ou comporter un ou plusieurs capteurs, tels que de manière non exhaustive un inclinomètre, un accéléromètre, un altimètre, un récepteur GPS (Global Positioning System selon une terminologie anglo-saxonne), une sonde ou tube de Pitot et/ou un gyroscope, aptes à délivrer des informations en lien avec l'assiette, la vitesse ou plus généralement la trajectoire du corps 10a du dispositif 10. Lesdits moyens de traitement sont ainsi agencés pour élaborer des commandes de puissance des propulseurs du groupe de poussée 12, notamment les propulseurs des sous-groupes de poussée 12a et 12b, selon les consignes du passager et/ou d'informations produites par de tels capteurs. Il en est de même pour l'élaboration de commandes de puissance des propulseurs secondaires correcteurs de cap 19a et 19b. De tels moyens de traitement peuvent se traduire sous la forme d'une ou plusieurs cartes électroniques, avantageusement positionnées à proximité du centre d'inertie CG10 du corps 10a du dispositif de propulsion 10, notamment si les capteurs sont compris dans ladite ou lesdites cartes électroniques. La figure 2C illustre notamment la position virtuelle dudit centre de gravité CG10 du corps 10a de l'exemple de réalisation du dispositif de propulsion 10. Dans la suite du document, nous considèrerons les termes « moyens de traitement du corps du dispositif de propulsion ou présents dans ledit corps » comme recouvrant tout arrangement permettant notamment de :
- fixer lesdits moyens de traitement dans ou sur ledit corps 10a, par exemple sur la plateforme 11 et/ou les moyens supports 14, 15a, 15b, et/ou
- connecter lesdits moyens de traitement par bornier ou couplage auxdits capteurs et/ou propulseurs, lorsque que lesdits moyens de traitement sont agencés pour être connectés et/ou déconnectés par le passager et/ou véhiculés par ledit passager.

En liaison avec les figures 2C et 2E, étudions à présent la structure d'un exemple préféré de réalisation d'un groupe de poussée 12 d'un dispositif de propulsion 10 selon un premier mode de réalisation conforme à l'invention et des moyens supports 14 d'un tel groupe de poussée.

Comme évoqué précédemment, un tel groupe de poussée 12 comporte deux sous-groupes de poussée 12a et 12b comprenant chacun deux propulseurs, référencés 12a1 et 12a2 pour le premier, et 12b1 et 12b2 pour le deuxième.

De tels propulseurs consistent, comme l'indique la figure 2E, en des turboréacteurs. Un turboréacteur est un moteur thermique, couramment exploité en aéronautique, qui transforme l'énergie potentielle contenue dans un carburant, par exemple du kérosène ou équivalent, associé à un comburant, en l'occurrence l'air ambiant aspiré par l'entrée de fluide 18 du corps 10a, en énergie cinétique. Cette énergie cinétique génère une force de réaction en milieu élastique, dans le sens opposé à l'éjection d'un rejet gazeux. Il en résulte une accélération d'une certaine quantité d'air entre l'entrée de fluide du propulseur et la tuyère d'éjection de ce dernier, produisant une poussée par détente dans ladite tuyère d'éjection. Un tel propulseur utilise un compresseur d'air à aubes ou rotors. Tout autre type de carburant pourrait éventuellement être utilisé en lieu et place du kérosène évoqué précédemment.

Selon les figures 2C, 2D et 2E, nous pouvons constater que chaque propulseur des sous-groupes de poussée 12a et 12b est orientable et, en fonctionnement nominal, orienté, suivant un axe AL12a (pour le propulseur 12a2) ou AL12b (pour le propulseur 12b1) sensiblement normal à un plan longitudinal de la plateforme 11, soit sensiblement parallèle à un axe longitudinal AL1 du passager 1. Lesdits propulseurs sont également orientés de sorte que la tuyère d'éjection de chacun desdits propulseurs rejette un flux gazeux selon une direction opposée à celle dudit axe longitudinal orienté AL1 allant des pieds vers la tête du passager 1. De cette façon, les propulseurs « poussent » ledit passager 1 via la plateforme 11. Comme évoqué précédemment, notamment pour augmenter la maniabilité du dispositif 10, le corps principal 10a de ce dernier comporte des moyens supports 14 du groupe de poussée 12, coopérant avec la plateforme 11, agencés pour soutenir ledit groupe de poussée 12 en concentrant les propulseurs le plus au centre possible du corps 10a. Ainsi, lesdits moyens supports 14 minimisent autant que possible les distances entre les directions d'éjection de flux gazeux AL12a, AL12b par les tuyères d'éjection respectives des propulseurs 12a1, 12a2, 12b1, 12b2 et les projections orthogonales respectives desdites directions dans un plan virtuel médian PM passant par le centre de gravité CG10 du corps 10a du dispositif 10, lesdites directions d'éjection de flux gazeux étant sensiblement parallèles audit plan médian PM. Dans le cas d'un tel dispositif, plus précisément, les moyens supports 14 sont agencés pour minimiser la distance entre lesdites directions d'éjection et un axe virtuel médian AM10 du corps 10a passant par ledit centre de gravité CG10. On réduit ainsi le moment d'inertie que le passager doit vaincre pour modifier, à l'aide de son corps, l'assiette du corps 10a et par voie de conséquence la trajectoire du dispositif de propulsion 10. Ainsi, le caractère ludique procuré par l'utilisation d'un tel dispositif de propulsion est décuplé. Selon l'exemple préféré illustré par les figures 2C, 2D et 2E, le centre de gravité CG10 du corps 10a est sensiblement localisé au centre des propulseurs des deux sous-groupes de poussée 12a et 12b. A titre d'exemple préféré mais non limitatif, les moyens supports 14 peuvent comporter une platine par sous-groupe de poussée sur laquelle sont montés, par une liaison mécanique de type encastrement, des colliers ceinturant respectivement les propulseurs de chaque sous-groupe. De cette manière, les propulseurs d'un même sous-groupe de poussée sont maintenus solidaires et sont orientés suivant des axes longitudinaux parallèles. Ainsi, deux colliers 14b1 et 14b2 ceinturent respectivement les propulseurs 12b1 et 12b2. Les deux colliers sont également fixés sur une platine 14b. Il en est de même pour les propulseurs du sous-groupe 12a. Deux colliers 14a1 et 14a2 ceinturent respectivement les propulseurs 12a1 et 12a2. Les colliers coopèrent avec une platine 14a, majoritairement masquée sur la figure 2E. L'épaisseur desdites platines 14a et 14b est réduite au maximum en leurs milieux pour que les propulseurs d'un même sous-groupe soient les plus proches les uns des autres. De la même manière, les moyens supports 14 sont agencés pour que les parties proximales desdites platines puissent coopérer, de sorte que lesdits sous-groupes de poussée soient les plus proches possibles. Lesdites parties proximales 14m, pour la platine 14b et 14f, pour la platine 14a, peuvent avantageusement décrire chacune un cylindre creux. Les sections desdits cylindres sont également avantageusement choisies afin que l'une desdites parties proximales pénètre la deuxième. A l'aide de trous débouchant de part et autre de chaque cylindre selon un axe normal à l'axe de révolution desdites parties proximales 14f et 14m, et d'une goupille par exemple, il est possible de solidariser les deux sous-groupes de poussée. On pourrait, en variante, constituer une liaison mécanique de type encastrement par soudure afin de solidariser les deux platines 14a et 14b. Ces deux platines permettent de réduire au maximum la distance séparant chaque propulseur des sous-groupes de poussée 12a et 12b d'un plan médian de la plateforme 11 passant par le centre de gravité CG10 du corps 10a du dispositif 10.

Lorsque les propulseurs des deux sous-groupes de poussée comportent des rotors de compresseurs montés contrarotatifs, les directions d'éjection des tuyères des propulseurs, par exemple les directions référencées AL12a et AL12b en figure 2E, peuvent être parallèles entre elles et sensiblement normales à un plan longitudinal de la plateforme 11.

Dans le cas contraire, la rotation des rotors au sein de chaque propulseur pourrait entraîner une rotation sur lui même du groupe de poussée 12 et, par voie de conséquence, du corps 10a du dispositif 10. Pour palier à cet inconvénient, l'invention prévoit que les moyens supports 14 puissent être agencés pour orienter la direction d'éjection de flux gazeux par la tuyère d'éjection de chaque propulseur de chaque sous-groupe de poussée 12a et 12b, afin que ladite direction d'éjection de flux gazeux décrive un angle β compris entre -10° et +10° avec un axe médian AM10 de la plateforme 11 ou du corps 10a. Comme l'indique la figure 2B, il est possible de croiser légèrement lesdites directions d'éjection des deux sous-groupes 12a et 12b formant un angle résultant du double de β, référencé « 2.β » en figure 2B. Un angle β d'une valeur absolue de quatre degrés suffit à annuler l'effet évoqué précédemment, si les propulseurs ne sont pas montés contrarotatifs, sans trop pénaliser la puissance effective du groupe de poussée 12. D'autres valeurs de β pourraient en variante être préconisées. Comme l'indique la figure 2E, de multiples trous sur les parties proximales 14m et 14f des platines 14a et 14b permettent de choisir l'angle β désiré. En variante, comme évoqué précédemment, les platines peuvent être orientées, l'une par rapport à l'autre en usine, par soudage.

Pour associer aux sous-groupes de poussée 12a et 12b des propulseurs secondaires correcteurs de cap 19a et 19b et ainsi permettre des trajectoires courbes, les moyens supports 14 d'un dispositif 10 conforme à l'invention, coopèrent avec des moyens supports secondaires 15a et 15b pour coopérer avec des propulseurs secondaires correcteurs de cap 19a et 19b et maintenir ces derniers selon une orientation de poussée sensiblement parallèle à un axe longitudinal de la plateforme 11. Ainsi, comme le décrit à titre d'exemple non limitatif la figure 2E, les platines 14a et 14b peuvent coopérer respectivement avec des bras 15a et 15b, ou plus généralement des extensions latérales. Selon ladite figure 2E, les platines 14a et 14b comportent des parties distales 14d, diamétralement opposées aux parties proximales évoquées précédemment. A l'instar de celles-ci, lesdites parties distales sont à sections circulaires creuses sensiblement plus faibles ou plus grandes que celles des parties proximales 15ap et 15bp desdites extensions 15a et 15b. Ainsi, les platines et extensions peuvent coopérer selon une liaison encastrement, éventuellement réalisée par soudure, voire au moyen de goupilles traversant des trous débouchants pratiqués dans lesdites parties distales 14d des platines 14a et 14b et proximales 15ap et 15bp des extensions 15a et 15b. Ainsi, une telle dernière configuration permet de régler l'orientation relative des extensions au regard desdites platines. Chaque extension 15a ou 15b comporte une partie distale 15ad ou 15bd agencée pour encercler ou plus généralement maintenir un propulseur secondaire correcteurs de cap 19a ou 19b. De manière préférée, un tel propulseur secondaire peut consister en une ou plusieurs turbines électriques. Un tel choix technologique permet de disposer de propulseurs secondaires correcteurs de cap 19a et 19b particulièrement réactifs, davantage que certains propulseurs thermiques, tels que des turboréacteurs.

Toutefois, un agencement de propulseurs thermiques correcteurs de cap 19a et 19b, pourrait consister en l'exploitation d'un turbopropulseur, en lieu et place de chaque turbine électrique, sensiblement orienté parallèle aux propulseurs des sous-groupes de poussée 12a et 12b. Pour conserver une forte réactivité, une sortie de fluide orientable, de type cône orientable d'une sortie de fluide d'un jet ski, pourrait coopérer avec la tuyère d'éjection de gaz du propulseur secondaire thermique. En orientant ledit cône dans un plan médian de la plateforme 11, on obtient un résultat somme toute proche de celui-ci conféré par l'utilisation des turbines électriques.

Lorsque que le corps 10a d'un dispositif de propulsion conforme à l'invention comporte avantageusement des moyens de traitement, non seulement de consignes du passager 1, mais aussi de capteurs d'assiette et/ou de trajectoire dudit corps 10a dans l'espace, l'invention prévoit d'exploiter la présence des propulseurs secondaires correcteurs de cap 19a et 19b pour aider ledit passager à maintenir un cap, notamment si les conditions climatiques sont défavorables. En effet, un vent violent et irrégulier peut entraîner le dispositif de propulsion selon une trajectoire en lacets, contrairement à la volonté du passager. Celui-ci peut compenser à l'aide d'une interface de consigne, comme nous l'expliquerons plus loin en liaison avec la figure 5, mais cette compensation peut s'avérer à la longue fastidieuse. L'invention prévoit ainsi d'adapter les moyens de traitement présents dans le corps 10a pour que ces derniers élaborent des commandes de puissance à destination des propulseurs secondaires correcteurs de cap 19a et 19b, afin que ceux-ci, en l'absence de consignes du passager signifiant un changement de trajectoire désiré, maintiennent le cap courant. A titre d'exemple, lorsqu'une rafale de vent a tendance à entraîner le dispositif de propulsion 10 selon une trajectoire en lacets sur la droite du passager, lesdits moyens de traitement, présents sur le corps 10a, élaborent une commande de puissance à destination du propulseur secondaire correcteur de cap 19b, c'est-à-dire celui positionné à la droite du passager 1, actionnant ledit propulseur secondaire 19b suffisamment pour annuler ce changement de trajectoire inopiné. Ledit propulseur secondaire correcteur de cap 19b est coupé dès que la trajectoire nominale est recouvrée. De cette façon, le dispositif de propulsion 10 maintient automatiquement sa trajectoire courante et décharge ledit passager de tout effort de compensation. Le choix de privilégier des propulseurs secondaires électriques est d'autant plus justifié par ce mode de réalisation, compte tenu de la grande réactivité requise pour de tels propulseurs secondaires correcteurs de cap 19a et 19b afin qu'ils compensent les aléas météorologiques, à l'insu du passager.

Par ailleurs, l'exemple de réalisation d'un groupe de poussée 12 soutenu par des moyens supports 14 d'un dispositif 10 décrit en liaison avec la figure 2E, présente desdits moyens supports 14 comprenant des extensions 15a et 15b comportant respectivement une paire de protubérances ou d'entretoises 15p et 15s. Celles-ci sont positionnées selon un axe normal à l'axe longitudinal de chaque extension 15a ou 15b afin de coopérer avec la plateforme 11. Cette dernière peut ainsi être fixée par vissage, lesdites protubérances étant taraudées dans ce cas. Toute autre mode de coopération entre les moyens supports 14 la plateforme 11 pourrait être imaginé selon l'invention.

Selon la figure 2E, les protubérances 15p et 15s sont respectivement positionnées sur l'extension 15a ou 15b respectivement à proximité des parties distales et proximales de ladite extension. Outre une fonction d'assemblage avec la plateforme 11, ces protubérances permettent de déterminer la hauteur relative des plages 11apratiquées sur la plateforme 11 pour accueillir les pieds du passager 1 par rapport au centre de gravité CG10 du corps 10a du dispositif de propulsion 10.

Il a été déterminé, après essais privés confidentiels et prototypage, que ladite hauteur relative desdites plages 11a par rapport au centre de gravité CG10 du corps 10a influe sur la maniabilité du dispositif de propulsion 10. Ainsi, comme l'indique la figure 2C notamment, il est particulièrement avantageux d'aménager la plateforme 11 de sorte que lesdites plages 11a présentent une hauteur hp relative au point bas B (déterminé par les parties distales des moyens saillants 17) du corps 10a du dispositif 10, lorsque ledit passager 1 occupe une position sensiblement verticale et que les tuyères d'éjection des propulseurs des sous-groupes de poussée 12a et 12b sont orientées en direction du sol :
- sensiblement égale ou supérieure à la hauteur h10, relative audit point bas B, du centre de gravité CG10 du corps 10a du dispositif 10, et
- inférieure à la hauteur h, relative audit point bas B, du centre de gravité CG de l'ensemble incluant le dispositif 10 et le passager 1.

Ainsi, les hauteurs respectives desdites protubérances 15p et 15s permettent d'ajuster cette configuration en régulant ladite hauteur hp. Des plages 11a situées quelques centimètres au-dessus du centre de gravité CG10, tel que le présente la figure 2C, procurent une grande maniabilité au dispositif de propulsion 10.

Pour pouvoir alimenter en carburant des propulseurs principaux, c'est-à-dire les propulseurs des sous-groupes de poussée 12a et 12b, l'invention prévoit que ledit carburant puisse être véhiculé dans un ou plusieurs réservoirs non représentés par les figures par mesure de simplification. A titre d'exemple non limitatif, un tel réservoir peut comporter une enveloppe rigide ou souple, une bouche de remplissage et une bouche de vidange. Il est ainsi possible d'approvisionner en carburant liquide ou gazeux un tel réservoir par la bouche de remplissage. A titre d'exemple non limitatif, un tel carburant peut être du kérosène, convenant actuellement couramment à des propulseurs conventionnels. Toutefois, d'autres carburants pourraient en variante être exploités. Ledit carburant est ensuite délivré par ledit réservoir par la bouche de vidange agencée pour coopérer avec un conduit d'alimentation, non représenté par mesure de simplification sur les figures, dont les extrémités sont respectivement connectées au réservoir, plus précisément à la bouche de vidange, pour recueillir le carburant et à un moyen collecteur, également non représenté sur les figures, pour alimenter les propulseurs en carburant. Un tel moyen collecteur dessert chaque propulseur thermique en carburant. Il coopère ainsi par liaison fluidique avec lesdits propulseurs et le réservoir.

Un tel réservoir peut être destiné à être porté par le passager, tel un sac à dos ou un parachute, au moyen de sangles ou d'un harnais, si possible de type Rallye, afin de pouvoir larguer immédiatement ledit réservoir en cas de début d'incendie. Un tel type de harnais est en effet réputé pour comporter des attaches prévues pour être désolidarisées aisément par la personne entravée en situation d'urgence. Un tel réservoir pourra également comporter une enveloppe souple pour accroître le confort du passager et réduire le risque de blessure de ce dernier lors d'une chute par exemple. Un réservoir peut, en variante ou en complément, être fixé sur la plateforme 11 ou sur les moyens supports 14 du groupe de poussée. Selon un mode de réalisation préférée, lorsque le réservoir est prévu pour être porté par le passager 1, l'enveloppe dudit réservoir pourra être avantageusement souple, telle une poche préalablement dégazée avant d'être emplie de carburant. Un tel choix améliore le confort et la sécurité du passager en cas de chute notamment et prévient tout risque de désamorçage de l'alimentation en carburant des propulseurs.

L'invention prévoit en outre qu'une source en énergie électrique puisse être avantageusement embarquée par le corps principal 10a d'un dispositif de propulsion 10. Une telle source peut consister en une ou plusieurs batteries et/ou cellules photovoltaïques, ces dernières servant de sources secondaires pour alimenter les éléments électroniques peu consommateurs en énergie, comme par exemple les moyens de traitement de consignes du passager et d'élaboration de commande de puissance du groupe de poussée. En revanche, les propulseurs secondaires correcteurs de cap 19a et 19b présentés précédemment nécessiteront une source plus conséquente, telle qu'une ou plusieurs batteries, si lesdits propulseurs secondaires sont électriques.

Pour pouvoir piloter la puissance du groupe de poussée et également décider des trajectoires de déplacement, un passager 1 d'un dispositif de propulsion 10 selon l'invention, peut avantageusement exploiter une interface homme-machine de consignes, dont la fonction première est de traduire une gestuelle dudit passager 1 en une consigne déterminée. La figure 5 décrit un exemple d'une telle interface homme-machine 60, sous la forme d'une télécommande prévue pour être tenue dans la main du passager 1 ou d'un instructeur durant une période d'apprentissage. Selon cet exemple non limitatif, ladite interface 60 s'apparente à une télécommande de type pistolet. Elle comporte notamment une gâchette 61 dont la course peut être interprétée comme une consigne d'augmentation de la puissance du groupe de poussée 12, lorsque la gâchette est actionnée par le passager 1 ou l'instructeur, et de ralentissement de ladite puissance lorsque ladite gâchette est peu à peu relâchée par son utilisateur. Une telle interface 60 peut en outre comporter d'autres organes tels qu'un ou plusieurs boutons, par exemple des boutons poussoirs non représentés en figure 5, pour éventuellement, établir des consignes de démarrage ou d'arrêt du groupe de poussée 12, pour couper l'alimentation de tel ou tel propulseur. Ladite interface 60 peut en outre comporter un ou plusieurs capteurs, tels un gyroscope, un inclinomètre, voire encore un capteur de mesure angulaire mesurant l'angle décrit par l'un des poignets de l'utilisateur dont la main tient l'interface 60 au regard de l'axe longitudinal de l'avant-bras concerné par rapport à une position de référence selon laquelle la main dudit utilisateur est alignée avec son avant-bras. Ainsi, le poignet s'orientant vers l'intérieur du corps de l'utilisateur peut signifier le souhait de voir pivoter le dispositif 10 vers la gauche, si ledit utilisateur tient l'interface 60 dans sa main droite. Inversement, un déplacement du poignet vers l'extérieur pourrait signifier la volonté d'orienter la trajectoire dudit dispositif 10 sur sa droite. En variante ou en complément, l'interface 60 peut comporter un inclinomètre. Une inclinaison de ladite interface 60 vers la gauche ou vers la droite de son utilisateur peut alors traduire une consigne d'orientation de la trajectoire du dispositif 10. Une telle consigne d'orientation est alors traduite par des commandes de puissance des propulseurs secondaires 19a et 19b décrits précédemment. Pour interpréter de tels gestes de son utilisateur, l'interface 60, décrite à titre d'exemple par la figure 5, comporte des moyens électroniques de traitement 62 des différentes informations collectées, par la gâchette 61 et autres boutons et/ou capteurs de ladite interface 60, pour produire des consignes interprétables par les moyens de traitement de telles consignes embarqués sur le corps 10a du dispositif de propulsion 10. Pour acheminer lesdites consignes à ces derniers moyens de traitement, l'interface 60 et lesdits moyens de traitement présents sur le corps 10a du dispositif 10 comportent des moyens de communication filaires ou avantageusement sans fil, par exemple par voie radio.

Lesdits moyens de traitement agencés pour être avantageusement positionnés à proximité du centre de gravité CG10 dudit corps 10a, sont agencés pour générer des commandes de puissance du groupe de poussée 12 à partir de consignes produites par l'interface 60. Chaque commande de puissance est avantageusement acheminée au propulseur concerné par des moyens de communication avantageusement filaires. De tels moyens de communication ne sont pas représentés sur les figures par mesure de simplification.

Nous pouvons en outre mentionner que des informations en lien avec le fonctionnement du groupe de poussée peuvent être élaborées par lesdits moyens de traitement et restituées au passager 1 via une ou plusieurs interfaces graphiques 20a et/ou 20b, telles que des écrans ou des voyants lumineux, avantageusement positionnées sur la plateforme 11 comme illustré par la figure 2D, à titre d'exemple non limitatif, à proximité des plages 11a.

Pour favoriser l'allumage ou le démarrage du groupe de poussée 12 d'un dispositif de propulsion 10 selon l'invention, il peut être avantageux de positionner le corps 10a dudit dispositif 10 de manière à ce que les propulseurs des sous-groupes de poussée 12a et 12b soient orientés sensiblement horizontalement. En effet, le carburant, par exemple le kérosène, a tendance à s'écouler avant l'allumage des propulseurs si ces derniers demeuraient verticaux. L'invention prévoit à ce titre, une station de décollage agencée pour permettre de basculer le corps 10a lors du démarrage du groupe de poussée 12, puis de positionner ledit corps 10a de sorte qu'un passager 1 puisse aisément prendre place sur les plages 11a. En variante, l'invention prévoit que le groupe de poussée 12 puisse être monté rotatif selon un axe transversal à la plateforme 11 pour permettre une rotation de 90° et ainsi résoudre l'inconvénient de devoir orienter le corps 10a si le groupe de poussée 12 coopère selon une liaison encastrement avec la plateforme 11. Après démarrage d'un tel groupe de poussée 12 monté rotatif, celui-ci serait maintenu fixe au regard de ladite plateforme 11, comme illustré par les figures 2A à 2C par tout moyen.

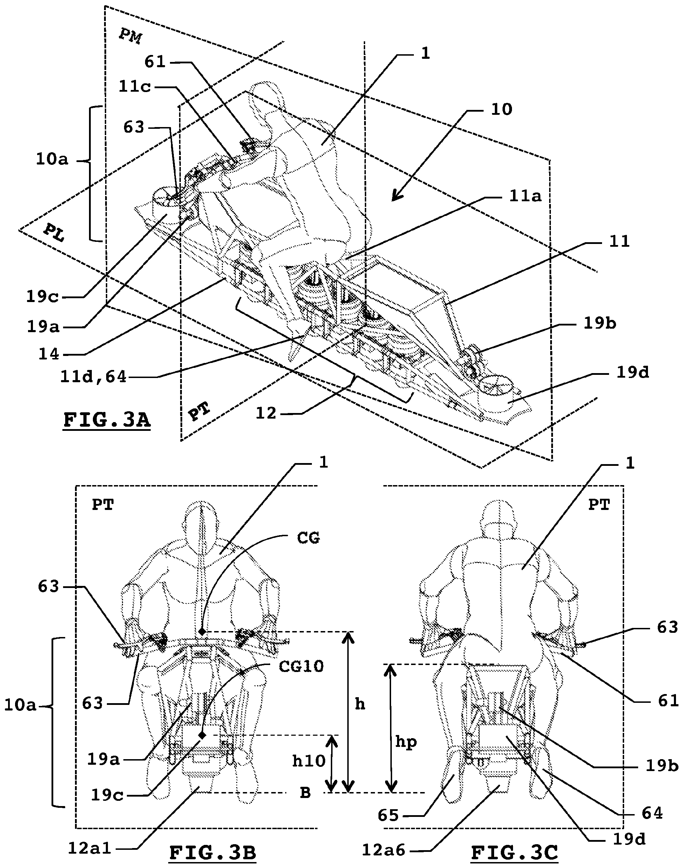

L'invention prévoit en outre un deuxième exemple de réalisation d'un dispositif de propulsion conforme à l'invention. Un exemple avantageux est présenté par les figures 3A à 3F. Le premier et précédent exemple (décrit en liaison avec les figures 2A à 2E) est davantage prévu pour des applications ludiques pour lesquelles l'agilité du pilote et/ou du(des) passager(s) est très souvent mise à l'épreuve. Pour favoriser des déplacements plus linéaires et moins acrobatiques, l'invention prévoit de réinventer la motocyclette telle que connue aujourd'hui. Bien que structurellement et physiquement distinct, un tel deuxième exemple de dispositif est de conception similaire à celle de celui-ci décrit en liaison avec les figures 2A à 2E.

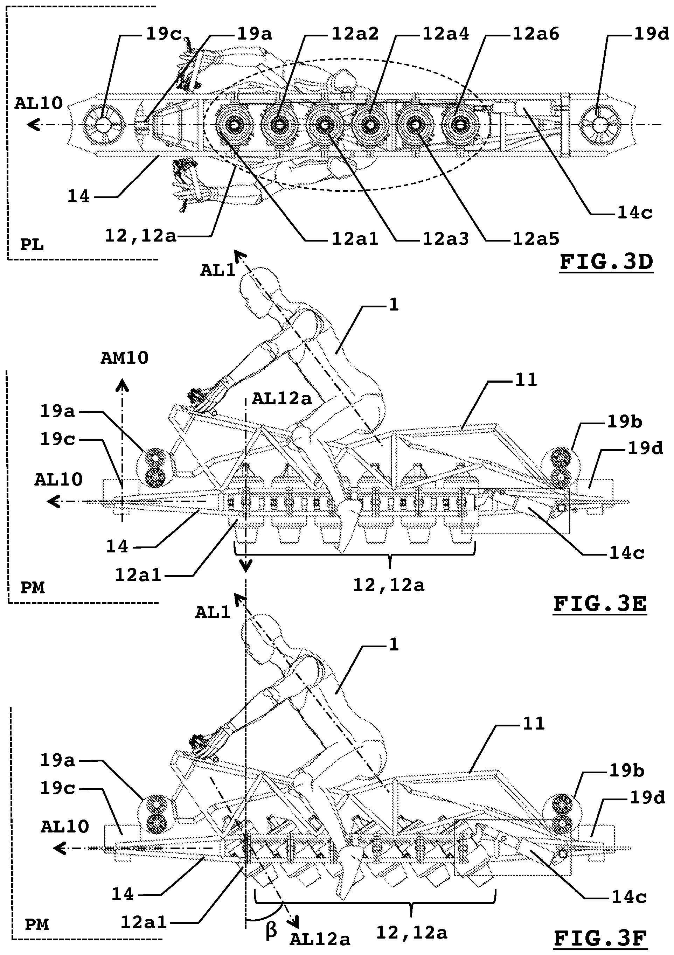

Une telle « motocyclette volante » est décrite notamment par les figures 3A à 3F, au travers de vues respectivement en perspective, de face, de dos, de dessous et de côté, pour les deux dernières. Un tel dispositif 10 comporte une plateforme 11, décrite de manière très simplifiée par lesdites figures 3A à 3F, selon lesquelles on n'en distingue essentiellement qu'une armature. Le pilote ou passager 1 peut prendre possession de son engin à l'instar d'une motocyclette terrestre conventionnelle sur une selle 11a non représentée par mesure de simplification sur la plateforme 11. Cette dernière présente ainsi une ou plusieurs aires 11a sur laquelle ledit pilote ou passager 1 peut prendre place, avantageusement mais non limitativement en position assise. Les pieds de ce dernier prennent appui sur des repose-pieds 11d munis d'accroches automatiques coopérant avec des cales appropriées sous les chaussures du passager 1, à l'instar d'un pédalier à pédales automatiques d'un cycliste sur route. Concernant le dispositif 10, les roues ont bien évidemment disparu et sont remplacées par un groupe de poussée 12 comportant, selon l'exemple décrit en liaison avec les figures 3A et 3D, six propulseurs référencés 12a1 à 12a6, de préférence thermiques à l'instar des propulseurs du groupe de poussée 12 décrit précédemment en liaison avec la figure 2E. Contrairement audit groupe de poussée 12 décrit avec le premier exemple de réalisation comportant deux sous-groupes de poussée 12a et 12b, comme l'indique la figure 2E, le groupe de poussée 12 de cette motocyclette volante ne comporte qu'un seul sous-groupe de poussée 12a comportant au mois deux propulseurs, en l'espèce six propulseurs sensiblement identiques. L'invention ne saurait être limitée à ce seul exemple d'agencement de groupe de poussée 12. Le nombre de propulseurs dudit sous-groupe de poussée 12a pourrait être inférieur ou supérieur à six. Il en est de même pour le nombre de sous-groupes de poussée. Il pourrait en effet être prévu que ledit groupe de poussée 12 comprenne deux rangées ou deux sous-groupes de poussée sensiblement montés parallèles, à l'instar du dispositif 10 décrit en liaison avec la figure 2A, voire encore d'un exemple de dispositif de propulsion décrit par la figure 4 de manière très simplifiée selon une vue de dessous, pour lequel la plateforme 11 et les moyens supports 14 sont également étirés en largeur. Nous verrons ainsi ultérieurement, en liaison avec ladite figure 4, que l'invention peut également être appliquée pour confectionner une automobile volante.

Le dispositif 10, décrit en liaison avec la figure 3A, peut, avantageusement mais non limitativement, comporter un élément de préemption 11c, équivalent à un guidon de motocyclette, afin de permettre au passager 1 de prendre appui avec ses mains. Un tel guidon 11c peut comporter une manette de contrôle de gaz associée à un capteur de mesure angulaire 61, par exemple sous la forme d'une poignée droite ou gauche montée rotative, selon les préférences du passager 1. Une telle manette de contrôle de gaz 61 pourra être exploitée à l'instar de la gâchette 61 de la télécommande 60 précédemment présentée en liaison avec la figure 5. Une telle manette 61, ou plus précisément le capteur qui lui est associé pour en mesurer la course, pourra avantageusement permettre de transmettre une commande de régulation de la puissance du groupe de poussée 12. Le guidon joue ainsi également un rôle d'interface homme-machine pour piloter l'engin. Il pourrait également comporter d'autres organes de consigne, tels que des boutons, non représentés en figure 3A, pour consigner un ordre de démarrage ou d'arrêt du groupe de poussée 12, notamment.

A l'instar d'une motocyclette terrestre, ledit guidon peut en outre comporter une ou deux poignées de frein 63 pour transmettre une consigne de décélération dudit groupe de poussée 12. Ledit guidon 11c peut être monté rotatif, comme celui d'une motocyclette terrestre, et comporter un capteur chargé de délivrer une mesure angulaire de la course dudit guidon 11c. Ce capteur pourra élaborer une consigne de changement de trajectoire, notamment lorsque le dispositif 10 se déplace à une vitesse lente, c'est-à-dire à quelques kilomètres par heure. A vitesses plus élevées, nous verrons ultérieurement que le dispositif 10 sera davantage et/ou uniquement réactif à l'inclinaison du corps 10a du dispositif 10, inclinaison imposée par un déplacement du corps du passager 1, pour influer sur la trajectoire et réaliser des trajectoires courbes. La plateforme 11 ou plus généralement le corps 10a du dispositif 10 comporte des repose-pieds 11d pour accueillir les pieds du passager 1. Préférentiellement, comme l'indiquent les figures 3A à 3F, lesdits repose-pieds 11d agencés pour accueillir les pieds ou chaussures du pilote ou du passager 1 sont avantageusement positionnées de part et d'autre dudit groupe de poussée 12. De tels repose-pieds 11d ou uniquement le repose-pied droit ou gauche peuvent comporter avantageusement un capteur de pression 64 pour délivrer une information qui pourra être traduite en consigne de décélération, ladite information étant complémentaire ou alternative à celle découlant de l'actionnement de l'éventuelle manette 63 du guidon 11c. Enfin, le second repose-pied, par exemple le repose-pied gauche, pourra comporter un capteur 65 sensible à une rotation, selon un axe transversal au corps 10a du dispositif 10, dudit repose-pied. Un appui de l'avant du pied du passager 1 pourra signifier une consigne d'inclinaison de l'assiette du dispositif 10 sur l'avant de ce dernier qui pourra ainsi « piquer du nez ». Inversement, un actionnement dudit repose-pied, par un appui du talon dudit passager 1, pourra signifier une consigne ordonnant au dispositif 10 de se cabrer. Toute autre interface de consigne pourrait, en lieu et place ou en complément du guidon 11c et/ou des repose-pieds, être exploitée. A titre d'exemple non limitatif, l'invention prévoit ainsi que des moyens électroniques de traitement, présents sur le corps 10a du dispositif 10, puissent exploiter une information délivrée par un inclinomètre apposé sur un vêtement ou un accessoire du passager 1 ou intégré audit vêtement ou accessoire. Grâce à l'information délivrée par un tel capteur, lorsque le passager 1 bascule son buste en avant en direction du guidon 11c, l'inclinaison du buste dudit passager 1 peut être traduite par lesdits moyens électroniques de traitement en une consigne d'augmentation de la puissance du groupe de poussée 12, voire d'une inclinaison des propulseurs d'un tel groupe 12, comme nous le verrons ultérieurement. Inversement, lorsque le passager 1 se redresse, une consigne de décélération pourra être élaborée par les moyens électroniques de traitement du dispositif 10. Pour élaborer de telles consignes et les traduire en commandes de puissance de propulseurs, à l'instar du dispositif 10 décrit en liaison avec les figures 2A à 2E, le dispositif 10 décrit en liaison avec les figures 3A à 3F, peut en outre et avantageusement comporter de tels moyens électroniques de traitement (non représentés par lesdites figures par mesure de simplification), consistant par exemple en un ou plusieurs microcontrôleurs ou cartes électroniques agencés, c'est-à-dire programmés, pour interpréter des informations délivrées notamment par les capteurs 61, 63, 64 et 65 et les traduire en consignes de pilotage. Le dispositif 10 peut en outre comporter, de manière non exhaustive, un inclinomètre, un altimètre, un récepteur GPS (Global Positioning System selon une terminologie anglo-saxonne), une sonde ou un tube de Pitot et/ou un gyroscope, plus généralement tous capteurs permettant auxdits moyens électroniques de traitement d'appréhender l'assiette, la vitesse ou la trajectoire du corps 10a du dispositif 10. Pour cela, lesdits capteurs coopèrent avec lesdits moyens électroniques par toute liaison filaire ou sans fil. Ils sont par ailleurs avantageusement pour certains, tels que notamment à titre d'exemples, un inclinomètre et/ou un gyroscope, positionnés sensiblement à proximité du centre de gravité CG10 du corps 10a. Un tel capteur, non représenté par lesdites figures, coopère par voie filaire ou par couplage, avec des moyens de traitement confondus ou complémentaires à ceux évoqués précédemment. De tels moyens, consistant par exemple, s'ils sont distincts, en un ou plusieurs microcontrôleurs ou carte(s) électronique(s), sont avantageusement agencés, c'est-à-dire programmés, pour coopérer, par liaison filaire ou par couplage, c'est-à-dire via une liaison sans fil au moyen d'un protocole de communication de courte portée de type Bluetooth ou équivalent, avec les moyens de traitement agencés pour produire une ou plusieurs commandes de puissance, transmises in fine à certains propulseurs du dispositif 10, à partir d'une information délivrée par ledit capteur d'assiette et/ou de trajectoire conjointement avec l'une des consignes précédemment évoquées et produites, grâce à une interface homme-machine répartie, contrairement à la télécommande 60 précédemment décrite en liaison avec la figure 5 qui centralise les organes de consigne principaux, constituée par exemple par le guidon 11c et/ou les repose-pieds 11d ou tout autre élément équivalent, lorsque ces derniers comportent des capteurs. Toute comme la figure 2A décrivant l'exemple de réalisation d'un premier dispositif de propulsion conforme à l'invention, la figure 3A nous permet également de définir les différents plans que nous nommerons alternativement « longitudinaux », « transversaux » ou « médians », respectivement référencés PL, PT et PM en figure 3A, à la lumière desquels nous pouvons décrire plus en détails l'agencement du corps 10a d'un deuxième exemple de dispositif de propulsion 10.

Ainsi, nous entendrons par:
- « plan médian » PM, tout plan normal notamment à la plateforme 11, qui sépare une moitié bâbord d'une moitié tribord du corps 10a du dispositif 10, lesdites moitiés n'étant pas nécessairement égales ;
- « plan transversal » PT, tout plan normal à un plan médian, qui sépare le corps 10a du dispositif de propulsion 10 en deux moitiés, l'une comportant l'avant, et l'autre comportant l'arrière dudit corps, lesdites moitiés n'étant pas nécessairement égales ;
- « plan longitudinal » PL, tout plan normal à des plans transversal et médian, ledit plan longitudinal séparant une moitié supérieure d'une moitié inférieure du corps 10a du dispositif 10, lesdites moitiés n'étant pas nécessairement égales.

Des tels plans PM, PT, PL sont illustrés en lignes pointillées sur la figure 3A. De la même manière, nous nommerons :
- « axe transversal », tout axe appartenant à la fois à un plan transversal et un plan longitudinal ;
- « axe longitudinal », tout axe appartenant à la fois à un plan médian et un plan longitudinal ;
- « axe médian », tout axe appartenant à la fois à un plan médian et un plan transversal.

Les figures 3A à 3F nous permettent de décrire l'agencement d'un groupe de poussée 12 d'un exemple préféré d'une motocyclette volante. Un tel groupe de poussée 12 comprend un sous-groupe de poussée 12a comportant six propulseurs 12a1 à 12a6, selon cet exemple non limitatif. Lesdits propulseurs 12a1 à 12a6 sont positionnés et maintenus par des moyens supports 14, agencés pour que lesdits propulseurs soient alignés le long d'un axe longitudinal AL10 du corps 10a du dispositif 10, les axes longitudinaux de ces derniers, tels que l'axe AL12a du propulseur 12a1 étant sensiblement confondus avec un plan médian PM du corps 10a du dispositif 10, ledit plan médian passant par le centre de gravité CG10 de ce dernier. Les tuyères d'éjection respectives desdits propulseurs 12a1 à 12a6 sont toutes parallèles entre elles. Ainsi, la direction d'éjection de flux gazeux par chaque tuyère d'éjection de chaque propulseur 12a1 à 12a6 est sensiblement opposée à la direction d'un axe longitudinal orienté AL1 du buste vers la tête du passager 1.

En liaison avec les figures 3E et 3F, nous pouvons constater que les moyens supports 14 des propulseurs 12a1 à 12a6 permettent d'incliner lesdits propulseurs d'un angle β compris entre -45° et 45°, ou du moins d'incliner dudit angle β l'axe AL12 des sorties d'éjection de fluide gazeux respectives, dans un plan médian PM du corps 10a du dispositif 10, par rapport à une direction nominale d'éjection de fluide, décrite par la figure 3E, c'est-à-dire sensiblement normale à un axe longitudinal AL10 du corps 10a du dispositif 10. Ainsi, selon la figure 3E, les propulseurs du groupe de poussée 12 projettent le dispositif 10 selon une trajectoire verticale. En revanche, lesdits propulseurs créent un déplacement en avant dudit dispositif 10, lorsque lesdites directions d'éjection de fluide sont orientées conformément à la figure 3F. Les directions d'éjection de fluide des propulseurs d'un même sous-groupe de poussée 12a peuvent être ainsi orientées sous l'impulsion d'un actionneur 14c, tel qu'à titre d'exemple non limitatif un vérin, dont la course provoque l'inclinaison conjointe desdites sorties de fluides gazeux. Un tel actionneur 14c peut être avantageusement piloté via des commandes élaborées par les moyens traitement évoqués précédemment et présents sur le corps 10a du dispositif 10, à partir de consignes de pilotage émanant du passager 1. A titre d'exemple, ledit actionneur 14c peut être au repos, comme l'indique la figure 3E, lorsque les capteurs 63 et/ou 64 sont sollicités par le passager 1 délivrant ainsi des consignes de décélération. Inversement, ledit actionneur 14c peut être mis en œuvre et entraîner l'inclinaison des propulseurs du groupe de poussée 12, sous l'action d'une commande idoine élaborée par lesdits moyens de traitement, lorsque ledit passager relâche la pression exercée sur le capteur 64 ou la course de la poignée 63, tout en actionnant la poignée rotative 61 traduisant la volonté du passager 1 d'augmenter la puissance du groupe de poussée 12. Ladite inclinaison devient ainsi progressive et de plus en plus marquée au fur et à mesure que la puissance du groupe de poussée croît et réciproquement. Une consigne de décélération conjointe à une consigne d'accroissement de la puissance du groupe de poussée 12 peut être synonyme d'un déplacement vertical du corps 10a.

A l'instar du dispositif 10 décrit en liaison avec la figure 2C notamment, le corps 10a du dispositif 10 selon les figures 3B et 3C, est avantageusement agencé de sorte que l'aire 11a de la plateforme 11, sur laquelle prend position le passager 1, présente une hauteur hp relative au point bas B du corps 10a du dispositif 10, lorsque les tuyères d'éjection (ou sorties de fluide) des propulseurs du sous-groupe de poussée 12a sont orientées en direction du sol, :
- sensiblement égale ou supérieure à la hauteur h10 relative audit point bas B du centre de gravité CG10 du corps 10a du dispositif 10, et
- inférieure à la hauteur h relative audit point bas B du centre de gravité CG de l'ensemble incluant le dispositif 10 et le passager 1.

Ainsi, la hauteur de selle 11a dudit passager 1 peut être avantageusement réglable en hauteur, selon le poids ou la morphologie de celui-ci, voire également selon les sensations ou le comportement du dispositif 10 recherchées par ledit passager 1, pour procurer à tout passager 1 un dispositif de propulsion d'une très grande maniabilité.

Pour pouvoir notamment pivoter aisément et évoluer en courbes, le groupe de poussée 12 d'un tel dispositif 10 peut avantageusement comporter des propulseurs secondaires 19a et 19b correcteurs de cap. Ces derniers peuvent être soutenus par les moyens supports 14 et disposés de manière excentrée selon un axe transversal de la plateforme 11, à l'instar des propulseurs secondaires correcteurs de cap du dispositif 10 précédemment décrit en liaison avec la figure 2A. En variante, pour limiter toute gêne occasionnée par la présence de tels propulseurs secondaires correcteurs de cap en position excentrée, l'invention prévoit que lesdits propulseurs secondaires correcteurs de cap puissent consister en deux paires 19a et 19b de propulseurs agencés pour éjecter un fluide dans des directions opposées selon des axes sensiblement parallèles à un axe transversal du corps 10a. Lesdites deux paires 19a et 19b sont maintenues par les moyens supports 14 selon deux positions respectivement devant et derrière l'aire 11a de la plateforme prévue pour accueillir le passager 1. Avantageusement, de manière à accroître leur rendement, ces deux paires 19a et 19b seront respectivement localisées à proximité des extrémités du corps 10a. La fonction première desdits propulseurs secondaires correcteurs de cap consiste à maintenir le cap courant du dispositif 10 en l'absence de toute volonté du passager d'effectuer une trajectoire courbe. Pour cela, lesdits propulseurs secondaires de chaque paire 19a et 19b peuvent être pilotés par une commande électrique de puissance élaborée par les moyens de traitement précédemment évoqués, prenant en compte les informations délivrées par le ou les capteurs d'assiette et de trajectoire présents sur le corps 10a, en l'absence de toute consigne émanant du passager 1 signifiant un changement de trajectoire désiré. En étant actionnés de manière non simultanée, ces propulseurs créent un couple suffisant pour entraîner une rotation autour d'un axe médian du corps 10a. Ainsi, lorsque le propulseur de la paire 19a localisée à l'avant du corps 10a, dont la tuyère d'éjection rejette un fluide vers la gauche dudit corps 10a, est actionné conjointement avec le propulseur de la paire 19b localisée à l'arrière du corps 10a, dont la tuyère d'éjection rejette un fluide vers la droite dudit corps 10a, ce dernier s'oriente automatiquement sur sa droite et réciproquement. A titre d'exemple, lorsqu'une rafale de vent à tendance à entraîner le dispositif de propulsion 10 selon une trajectoire en lacets sur la gauche ou la droite du passager 1, lesdits moyens de traitement, présents sur le corps 10a, élaborent une commande de puissance à destination des propulseurs secondaires correcteurs de cap 19a et 19b, actionnant l'un des propulseurs secondaires de chaque paire, lesdits propulseurs étant orientés selon des directions d'éjection de fluide opposées pour annuler ce changement de trajectoire inopiné. Lesdits propulseurs secondaires correcteurs de cap sont coupés dès que la trajectoire nominale est recouvrée. De cette façon, le dispositif de propulsion 10 maintient automatiquement sa trajectoire courante et décharge ledit passager 1 de tout effort de compensation. En variante ou en complément, afin de s'affranchir de l'emploi de tels propulseurs secondaires, l'invention prévoit de pouvoir adjoindre à tout ou partie des propulseurs du ou des sous-groupes de poussée 12a, 12b une sortie de fluide orientable, de type cône orientable d'une sortie de fluide d'un jet ski par exemple, qui coopèrerait avec la tuyère d'éjection du flux gazeux du ou des propulseurs concernés, selon une ou des liaisons mécaniques respectives adaptées, telles que par exemple des liaisons pivot ou encastrement.

Le choix de privilégier des propulseurs secondaires correcteurs de cap sous la forme de turbines électriques peut être justifié par la grande réactivité requise pour de tels propulseurs secondaires correcteurs de cap 19a et 19b, afin qu'ils compensent automatiquement et instantanément les aléas météorologiques, à l'insu du passager. Toutefois, comme évoqué avec le mode de réalisation précédent, des propulseurs thermiques, éventuellement dotés de sorties de fluide orientables, pourraient être utilisés en lieu et place de turbines électriques.

Lesdits propulseurs secondaires correcteurs de cap 19a et 19b permettent également au passager 1 de décrire des trajectoires courbes ou des déplacements latéraux, par exemple vers la gauche ou vers la droite du corps 10a. Ainsi, lorsque le passager utilise un guidon 11c monté rotatif, les moyens de traitement, chargés d'élaborer les commandes de puissance desdits propulseurs secondaires, exploitent l'information délivrée par le capteur mesurant l'angle opéré par ledit guidon pour élaborer des commandes de puissance à destination de l'un des propulseurs de chaque paire 19a et 19b, pour créer un trajectoire courbe. A vitesse de déplacement élevée, une telle consigne de changement de cap désiré par le passager 1 sera élaborée par lesdits moyens de traitement à partir d'informations délivrées par un inclinomètre ou un gyroscope présent sur le corps 10a du dispositif. Ainsi, lorsque ledit passager 1 oriente latéralement et volontairement son corps pour incliner le corps 10a du dispositif 10 sur sa droite, une consigne de changement de cap vers la droite du passager 1 sera élaborée par lesdits moyens de traitement. Ces derniers élaboreront les commandes de puissance des propulseurs secondaires correcteurs de cap en conséquence, comme évoqué précédemment suite à l'actionnement du guidon 11c. Il en serait de même pour une inclinaison volontaire du corps 10a imposée par le passager 1, traduisant ainsi la volonté de celui-ci de changer le cap courant vers sa gauche. La présence desdits propulseurs secondaires correcteurs de cap 19a et 19b, associée à la prise en compte d'informations délivrées par de multiples capteurs traduisant le déplacement du corps 10a et/ou des consignes de pilotage émanant du passager 1 confère ainsi une très grande maniabilité au dispositif de propulsion 10. Selon un mode de réalisation avantageux, la fonction desdits propulseurs secondaires correcteurs de cap 19a et 19b peut être renforcée par la présence d'une dérive ou empannage, sous la forme par exemple d'un élément optionnel sensiblement plan, orienté selon un plan parallèle à un plan médian du corps 10a et orientable, selon une liaison de type pivot d'axe parallèle à un axe médian du corps 10a. A l'instar d'un empannage utilisé en aéronautique, un tel élément optionnel, non représenté par les figures par mesure de simplification, peut être avantageusement piloté par un actionneur à commandes électriques. De telles commandes électriques peuvent être élaborées par les moyens électroniques de traitement présents sur le corps 10a du dispositif 10 conjointement à celles destinées aux propulseurs 19a et 19b.

La plateforme 11 d'un tel dispositif 10 étant étirée selon un axe longitudinal du corps 10a, ainsi que la position assise du passager 1, font qu'il n'est pas aisé pour ledit passager 1 de maîtriser une assiette sensiblement horizontale le long dudit axe longitudinal AL10. Pour corriger automatiquement cette horizontalité de l'assiette, un tel dispositif de propulsion 10 peut en outre comporter des propulseurs secondaires correcteurs d'assiette 19c et 19d. Ces derniers se présentent de manière avantageuse mais non limitative, sous la forme de turbines électriques. Ils sont respectivement localisés aux extrémités du corps 10a du dispositif 10 et maintenus par les moyens supports 14. Ils sont orientés selon une même direction parallèle à un axe médian AM10 du corps 10a du dispositif 10. Ils permettent, à l'instar des propulseurs secondaires correcteurs de cap 19a et 19b, de maintenir une assiette sensiblement horizontale selon un axe longitudinal AL10 du corps 10a en l'absence de toute consigne de pilotage, visant à souhaiter voir plonger ledit corps 10a ou au contraire voir « cabrer » ledit corps 10a. Pour cela, lesdits propulseurs 19c et 19d sont alternativement actionnés via des commandes de puissance élaborées par les moyens de traitement présents sur le corps du dispositif 10, interprétant les informations délivrées par les capteurs d'assiette et/ou de trajectoire dudit corps 10a. Ainsi, lorsque que le dispositif 10 est involontairement déséquilibré par une rafale de vent, l'avant de celui-ci se trouvant plus haut que l'arrière du corps 10a, le propulseur 19d situé à l'arrière dudit corps 10a est actionné pour corriger automatiquement l'horizontalité de l'assiette, déchargeant ainsi le passager 1 de toute compensation fastidieuse de ladite assiette. Inversement, l'assiette dudit corps 10a peut être volontairement modifiée par le passager 1, au moyen de consignes de pilotage évoquées précédemment prises en compte par lesdits moyens de traitement présents sur le corps 10a du dispositif 10. Le passager 1 peut ainsi modifier à souhait toutes les directions de déplacement de son dispositif de propulsion avec une très grande intuitivité à l'instar d'un pilote d'une motocyclette terrestre.

L'invention prévoit à titre optionnel que puisse être désactivée l'exploitation automatique des propulseurs secondaires correcteurs de cap 19a, 19b et/ou correcteurs d'assiette 19c, 19d, c'est-à-dire celle permettant par la seule exploitation des capteurs d'assiette et/ou de trajectoire présents sur le corps 10a, de maintenir un cap ou une assiette indépendamment de consignes de pilotage émanant de la volonté du passager. Une telle désactivation et/ou une telle réactivation peuvent être déterminées par le passager au moyen d'une interface homme-machine adaptée, par un exemple un bouton présent sur le guidon 11c, les moyens électroniques de traitement du corps 10a prenant en considération l'information délivrée par une telle interface homme-machine pour élaborer et transmettre de telles commandes de maintien du cap et/ou d'assiette aux propulseurs secondaires uniquement si et seulement si ladite interface décrit la volonté du passager de bénéficier d'une telle assistance. Dans la négative, le pilote et/ou passager 1 pourra disposer de ses seuls pleins pouvoirs d'orientation du dispositif 10 pour effectuer certaines manoeuvres pour lesquelles il ne souhaite pas d'assistance. Une telle fonctionnalité peut être généralisée à tout dispositif 10 conforme à l'invention.

La description du corps 10a d'un tel dispositif 10 par les figures 3A à 3F est volontairement centrée sur les éléments primordiaux au fonctionnement dudit dispositif. Toutefois, tout comme le dispositif 10 précédemment illustré par la figure 2A notamment, le corps 10a de ce deuxième exemple de dispositif de propulsion 10 conforme à l'invention peut avantageusement comporter des moyens saillants, non représentés par les figures 3A à 3F, coopérant avec la plateforme 11 et/ou les moyens supports 14 agencés pour prévenir tout choc ou contact direct entre le sol et le groupe de poussée 12 du dispositif 10. De tels moyens saillants peuvent consister notamment en des pieds de longueurs suffisantes pour que la ou les tuyères d'éjection du groupe de poussée 12 ne puissent heurter le sol et pour offrir également une certaine stabilité, lorsque le dispositif 10 est posé sur le sol ou sur une station de décollage également non décrite par lesdites figures 3A à 3F, afin que le passager 1 puisse prendre efficacement position sur la plateforme 11. En variante, de tels moyens saillants pourraient consister en une paire de skis ou tous autres éléments aptes à assurer une certaine stabilité selon la nature du sol ou du support du dispositif 10. Avantageusement, de tels moyens saillants pourront être prévus escamotables ou rétractables, par exemple télescopiques. Les moyens électroniques de traitement du corps 10a pourront être agencés pour commander respectivement une rétractation et/ou un déploiement automatiques desdits moyens saillants dès que la vitesse de déplacement du corps 10a dépasse ou se trouve en deçà d'une vitesse prédéterminée, par exemple cinquante kilomètres par heure, et améliorer ainsi l'aérodynamisme. En variante, de tels rétractation et/ou déploiement pourront être déclenchés par l'actionnement, par le passager 1, d'une interface homme-machine déterminée, telle qu'un bouton ou manette en communication avec lesdits moyens de traitement du corps 10a ou directement avec un actionneur desdits moyens saillants.

Le corps 10a peut comporter en outre d'éventuels éléments de carénage, non décrits par les figures 3A à 3F, coopérant avec la plateforme 11 et/ou les moyens supports 14 par toute liaison mécanique de type encastrement réversible ou irréversible (soudure, vissage, par exemple) ou constituant avec ladite plateforme 11 une même entité physique. La fonction d'un tel carénage est de prévenir tout contact direct entre le groupe de poussée 12 et le passager 1. La morphologie (dimensions, forme) d'un tel carénage sera ainsi agencée pour s'adapter aux dimensions du groupe de poussée 12, conférer une esthétique et/ou soigner l'aérodynamisme du corps 10a du dispositif de propulsion, tout en limitant toute gêne pour le passager 1. Il est en effet précieux de pouvoir limiter tout contact entre le passager et le groupe de poussée pour prévenir tout risque de blessure de ce dernier, la température des parois extérieures du groupe de poussée 12 pouvant rapidement être très élevée. En outre, un tel carénage pourra comporter une ou plusieurs entrées d'air pour alimenter en fluide les propulseurs. De telles entrées d'air pourront être dotées de grilles pour éviter l'aspiration de corps étrangers (feuilles, débris, volatiles, etc.). Le choix du ou des matériaux prévus pour constituer un tel carénage sera fonction de la température maximale du groupe de poussée 12 à proximité directe des éléments dudit carénage afin que celle-ci n'altère pas la structure de ces derniers.

Enfin, pour alimenter les propulseurs thermiques du corps 10a d'un tel dispositif 10, ledit corps 10a peut comporter un ou plusieurs logements agencés pour contenir un ou plusieurs réservoirs du carburant liquide ou gazeux nécessaire au fonctionnement desdits propulseurs, par exemple du kérosène. De tels réservoirs ne sont pas représentés par mesure de simplification par les figures 3A à 3F. Pour prévenir tout déséquilibre non automatiquement compensable par les propulseurs secondaires correcteurs de cap 19a et 19b, le ou les réservoirs seront avantageusement positionnés le plus proche d'un plan transversal PT traversant le centre de gravité CG10 du corps 10a, et le long d'un axe longitudinal appartenant à un plan médian PM passant par ledit centre de gravité CG10. Egalement par mesure de simplification, les figures ne décrivent pas la liaison fluidique, comportant par exemple un ensemble de durites, collecteurs et/ou dessertes, entre le ou lesdits réservoirs de carburant et les propulseurs du corps 10a pour acheminer ledit carburant auxdits propulseurs. A l'instar du premier exemple de réalisation précédemment décrit en liaison avec la figure 2A, l'invention prévoit que l'on puisse adjoindre au passager 1 un réservoir de carburant annexe pouvant, au besoin, être également en communication fluidique avec lesdits propulseurs. En outre, le corps 10a, voire les vêtements et/ou accessoires portés par le passager 1, pourront comporter une ou plusieurs sources en énergie électrique, par exemple une ou plusieurs batterie(s), panneaux photovoltaïques ou éoliennes, etc., connectées aux organes nécessitant une telle alimentation électriques, tels que, par exemple, les moyens de traitement, capteurs, turbines électriques.

La figure 4 présente succinctement une vue de dessous simplifiée d'un véhicule 10 conforme à l'invention, généralisant en quelque sorte l'exploitation de l'invention à tout véhicule volant équivalent d'une automobile, d'un transporteur de biens, marchandises et/ou de passagers terrestres.

Comme l'indique ladite figure 4, le corps d'un tel dispositif, notamment une plateforme 11 et des moyens supports 14, peut coopérer avec, ou comporter, un groupe de poussée comprenant un ou plusieurs sous-groupes de poussée, en l'espèce deux sous-groupes de poussée 12a et 12b de huit propulseurs thermiques chacun. Le nombre de sous-groupes ainsi que les nombres respectifs de propulseurs desdits sous-groupes de poussée seront déterminés en fonction de la configuration du corps du dispositif de propulsion, de la charge que l'on souhaite véhiculer et des performances et autonomie recherchées.

Pour conférer une grande maniabilité à un tel véhicule, il est avantageux d'agencer ledit groupe de poussée, de sorte que la distance entre la direction d'éjection de flux gazeux par la tuyère d'éjection de chaque propulseur et la projection orthogonale de ladite direction d'éjection de flux gazeux dans un plan médian passant par le centre de gravité du corps du véhicule soit minimisée.

Par ailleurs, afin de décharger de toute compensation de perte de cap inopinée, un tel véhicule comporte avantageusement des propulseurs secondaires correcteurs de cap 19a et 19b. En liaison avec la figure 4, de tels propulseurs secondaires sont positionnés de manière latérale à l'instar de ceux évoqués en liaison avec la figure 2A. Ils pourraient, en variante ou en complément, être agencés à l'instar des propulseurs correcteurs de cap décrit en liaison avec la figure 3A. Enfin, pour maintenir ou modifier l'horizontalité de l'assiette d'un tel véhicule le long d'un axe longitudinal, ledit véhicule peut comporter des propulseurs correcteurs d'assiette 19c et 19d sensiblement disposés aux extrémités du corps dudit véhicule. Selon la largeur de celui-ci, on pourra n'exploiter que deux propulseurs, à l'instar de ceux décrits en liaison avec la figure 3A, voire deux paires, ou deux autres ensembles de propulseurs, afin d'améliorer la stabilité du véhicule. En l'espèce, le véhicule décrit en liaison avec la figure 4 dispose de deux paires de propulseurs correcteurs d'assiette 19c et 19d localisés dans les angles du corps dudit véhicule. Tout type d'interface homme-machine pour élaborer des consignes de pilotage pourrait par ailleurs être utilisé. Un tel véhicule peut comporter des moyens électroniques de traitement de telles consignes pour élaborer des commandes de puissance des différents propulseurs et des capteurs d'assiette et/ou de trajectoire, dont les informations produites par ces derniers sont prises en compte conjointement avec les consignes de pilotage par lesdits moyens de traitement pour produire les commandes de puissance.

Quelle que soit la configuration du corps d'un tel dispositif de propulsion conforme à l'invention, ledit dispositif permet un grand nombre d'applications ludiques et/ou de services. L'invention révolutionne le transport tel qu'on le considère aujourd'hui et ne saurait être limitée par les seuls exemples d'utilisation précédemment cités.

Des accessoires pour améliorer encore le caractère ludique ou les conditions d'exploitation d'un tel dispositif pourraient également être apportés, notamment en matière d'éclairage, d'aide à la navigation, de pilotage à distance avec ou sans passager, etc. A titre d'exemple, un tel dispositif pourra comporter des moyens de communication longue portée pour échanger avec une station de pilotage distante, afin que ladite station élabore des consignes de pilotage interprétables par les moyens électroniques de traitement du dispositif 10 à titre supplétif. En variante, lesdits moyens électroniques de traitement pourront comporter en mémoire des coordonnées de déplacement, renseignées avant un vol ou pendant un tel vol par le passager, afin de produire les commandes de puissance délivrées aux différents propulseurs du dispositif 10 et atteindre une destination sans assistance dudit passager. Lesdits moyens électroniques de traitement pourront mettre à profit la présence éventuelle d'un récepteur GPS, comme évoqué précédemment, pour connaître à tout instant la position géographique du dispositif 10 durant son trajet.

L'invention prévoit également la présence de toute interface homme-machine adaptée pour restituer au passager graphiquement, de manières sonore ou kinesthésique, des informations en lien avec le fonctionnement de son dispositif de propulsion. Un système de vision desdites informations intégré à une visière d'un casque de protection et/ou de détection de consignes de pilotage par analyse des déplacements de l'iris d'un œil du passager porteur d'un tel casque, pourrait par exemple être envisagé.

Comme l'indique la figure 2F en lien avec l'exemple de réalisation non limitatif d'un groupe de poussée 12 selon la figure 2E, l'invention prévoit par ailleurs de pouvoir adjoindre à tout ou partie des propulseurs du ou des sous-groupes de poussée 12a, 12b une sortie de fluide orientable, de type cône orientable d'une sortie de fluide d'un jet ski par exemple, qui coopèrerait avec la tuyère d'éjection du flux gazeux du ou des propulseurs concernés. Il en est ainsi sur la figure 2F qui décrit deux vues, respectivement de face et de côté, d'un exemple de groupe de poussée 12 comportant deux sous-groupes de poussée 12a et 12b. Parmi les quatre propulseurs, la figure 2F met en exergue le propulseur 12b1 dont la direction nominale AL12b d'éjection de flux gazeux est représentée par une ligne discontinue. Nous pouvons constater que la tuyère d'éjection de flux gazeux dudit propulseur 12b1 coopère avec une sortie de fluide 12ex montée mobile, telle un cône orientable, selon une liaison mécanique de type pivot d'axe 12ax parallèle à un axe transversal du corps 10a d'un dispositif 10 décrit en liaison avec la figure 2A. Une telle sortie de fluide orientable peut décrire, dans un plan médian du corps 10a, un angle δ autour de l'axe 12ax. Ainsi, qu'un propulseur d'un groupe de poussée conforme à l'invention soit dynamiquement orientable ou non, les moyens de traitement du corps d'un dispositif de propulsion peuvent être adaptés pour piloter un actionneur d'une telle sortie de fluide orientable pour dévier la direction d'éjection de fluide dudit propulseur notamment par rotation autour d'un axe parallèle à un axe transversal du corps du dispositif. De cette façon, il devient possible, sans devoir incliner le propulseur et/ou ledit corps du dispositif de propulsion en tant que tels, de favoriser un déplacement vers l'avant dudit dispositif lorsque une telle sortie de fluide est orientée vers l'arrière de ce dernier et réciproquement. Une telle fonction peut être actionnable sur demande du passager, par exemple via la sollicitation d'une interface homme-machine adaptée, à l'instar du dispositif, connu sous l'appellation de TRIM, équipant de nombreux monteurs hors-bord de bateaux consistant en un vérin positionné sur l'étrier de fixation du moteur et commandé par un bouton ou une gâchette par le passager dudit bateau. L'effet du TRIM consiste à écarter ou à rapprocher le moteur du tableau arrière du bateau, afin de modifier l'angle de poussée de l'hélice motorisée et, par voie de conséquence, l'assiette dudit bateau. Une telle adaptation des sorties de fluide des propulseurs d'un dispositif de propulsion selon l'invention, qu'il soit conforme aux premier, deuxième ou troisième modes de réalisation, c'est-à-dire tel que ceux décrits à titre d'exemples selon les figures 2A, 3A ou 4, favorise les déplacements rectilignes, voire la vitesse de déplacement, du dispositif de propulsion tout en maintenant une horizontalité de l'assiette du corps de ce dernier.

## Revendications

1. Dispositif de propulsion (10) d'un passager (1), ledit dispositif comprenant un corps (10a) comportant :
- une plateforme (11) comportant plusieurs plages (11a, 11b) agencées pour accueillir les pieds ou chaussures dudit passager (1) ; et
- un groupe de poussée (12) comprenant au moins un sous-groupe de poussée (12a, 12b) comprenant chacun au moins un turboréacteur (12a1, 12a2, 12a3, 12a4, 12a5, 12a6, 12b1, 12b2) ;
- la direction d'éjection de flux gazeux de chaque dudit au moins un turboréacteur (12a1, 12a2, 12a3, 12a4, 12a5, 12a6, 12b1, 12b2) étant orientable et, en fonctionnement nominal, orientée suivant un axe (AL12a, AL12b) sensiblement normal à la plateforme (11) ;
- ledit corps (10a) du dispositif (10) comportant des moyens supports (14) du groupe de poussée (12) coopérant avec la plateforme (11) et étant agencés pour soutenir ledit groupe de poussée (12) et minimiser la distance entre un axe projeté dans un plan médian (PM) de la plateforme (11) et passant par le centre de gravité (CG10) du corps (10a) du dispositif de propulsion (10) et ladite direction d'éjection de flux gazeux (AL12a, AL12b) de chaque dudit au moins un turboréacteur (12a1, 12a2, 12a3, 12a4, 12a5, 12a6, 12b1, 12b2) ;
- les plages (11a, 11b) pour accueillir les pieds ou chaussures dudit passager (1) étant positionnées de part et d'autre dudit groupe de poussée (12).

2. Dispositif (10) selon la revendication précédente, pour lequel le au moins un sous-groupe de poussée (12a, 12b) comporte un premier (12a1, 12a2, 12a3, 12a4, 12a5, 12a6) et un deuxième (12b1, 12b2) turboréacteurs dont les directions d'éjection de flux gazeux (AL12a, AL12b) respectives sont normales à la plateforme.

3. Dispositif selon l'une quelconque des revendications précédentes, pour lequel les plages (11a) pour accueillir les pieds ou chaussures dudit passager (1) comportent des moyens de maintien sous la forme de repose-pieds (11d) ou d'une paire de chaussons ou de bottes de fixation.

4. Dispositif selon l'une quelconque des revendications précédentes, pour lequel le corps (10a) dudit dispositif (10) comporte des moyens saillants (17) coopérant avec la plateforme (11) et/ou les moyens support (14) et étant agencés pour prévenir tout choc ou contact direct entre le sol et le groupe de poussée (12) du dispositif (10).

5. Dispositif selon la revendication 2, pour lequel le premier (12a1, 12a2, 12a3, 12a4, 12a5, 12a6) et le deuxième (12b1, 12b2) turboréacteurs du au moins un sous-groupe de poussée (12) sont agencés contrarotatifs.

6. Dispositif selon l'une des revendications 2 ou 5, pour lequel les moyens supports (14) sont agencés pour maintenir parallèles le premier (12a1, 12a2, 12a3, 12a4, 12a5, 12a6) et le deuxième (12b1, 12b2) turboréacteurs du au moins un sous-groupe de poussée (12a, 12b).

7. Dispositif selon l'une quelconque des revendications précédentes, comportant un carénage (13u), coopérant avec la plateforme (11) ou constituant avec ladite plateforme (11) une même entité physique, agencé pour prévenir tout contact direct entre le groupe de poussée (12) et le passager (1).

8. Dispositif selon la revendication précédente, pour lequel le carénage (13u) comporte une grille (18) agencée pour occulter partiellement l'entrée de fluide du au moins un turboréacteur (12a1, 12a2, 12a3, 12a4, 12a5, 12a6, 12b1, 12b2) du au moins un sous-groupe de poussée (12) et prévenir ainsi l'aspiration de corps étrangers par ladite entrée de fluide.

9. Dispositif selon l'une quelconque des revendications précédentes, pour lequel le groupe de poussée comporte en outre des propulseurs secondaires correcteurs de cap (19a, 19b) et/ou d'assiette (19c, 19d).

10. Dispositif selon l'une quelconque des revendications précédentes, comprenant en outre un réservoir d'un carburant en communication fluidique avec le au moins un turboréacteur (12a1, 12a2, 12a3, 12a4, 12a5, 12a6, 12b1, 12b2) du au moins un sous-groupe de poussée (12a, 12b) pour alimenter ledit au moins un turboréacteur (12a1, 12a2, 12a3, 12a4, 12a5, 12a6, 12b1, 12b2) en carburant, ledit réservoir coopérant avec le corps (10a) du dispositif de propulsion (10) ou le corps du passager (1).

11. Dispositif selon l'une quelconque des revendications précédentes, comportant une interface homme-machine de consignes (60, 11c, 11d) traduisant une gestuelle du passager (1) en une consigne, des moyens de traitement de ladite consigne produite et de génération d'une commande de puissance du au moins un turboréacteur (12a1, 12a2, 12a3, 12a4, 12a5, 12a6, 12b1, 12b2) du au moins un sous-groupe de poussée (12a, 12b) à partir de ladite consigne produite, ladite commande de puissance dudit au moins un turboréacteur (12a1, 12a2, 12a3, 12a4, 12a5, 12a6, 12b1, 12b2) étant acheminée au groupe de poussée (12) par des moyens de communication.

12. Dispositif selon la revendication précédente lorsqu'elle dépend de la revendication 9, pour lequel les moyens de traitement génèrent une commande de puissance des propulseurs secondaires correcteurs de cap (19a, 19b) ou d'assiette (19c, 19d) à partir de ladite consigne produite par l'interface homme-machine de consignes (60, 11c, 11d), ladite commande de puissance desdits propulseurs secondaires correcteurs de cap (19a, 19b) et/ou d'assiette (19c, 19d) étant acheminée par des moyens de communication.

13. Dispositif selon la revendication précédente, comportant un capteur d'assiette et/ou de trajectoire coopérant avec le corps (10a) du dispositif (10) sensiblement positionné au centre de gravité (CG10) de ce dernier et avec les moyens de traitement, ces derniers générant la commande de puissance du au moins un turboréacteur (12a1, 12a2, 12a3, 12a4, 12a5, 12a6, 12b1, 12b2) du au moins un sous-groupe de poussée (12a, 12b) ou des propulseurs secondaires correcteurs de cap (19a, 19b) et/ou d'assiette (19c, 19d) à partir d'une information délivrée par le capteur d'assiette et/ou de trajectoire conjointement avec une consigne produite par l'interface homme-machine (60, 11c, 11d).

14. Dispositif selon l'une quelconque des revendications 11 à 13, pour lequel l'interface homme-machine de consignes comporte en outre un capteur de mesure angulaire mesurant l'angle décrit par un poignet du passager (1) au regard de l'axe longitudinal de l'avant-bras concerné par rapport à une position de référence selon laquelle la main du passager (1) est alignée avec ledit avant-bras.

15. Dispositif selon la revendication 10, pour lequel le réservoir d'un carburant, en communication fluidique avec le au moins un turboréacteur (12a1, 12a2, 12a3, 12a4, 12a5, 12a6, 12b1, 12b2) du au moins un sous-groupe de poussée (12a, 12b) pour alimenter ces derniers en carburant, comporte une enveloppe souple et un harnais pour coopérer avec le corps du passager (1) dont les attaches sont prévues pour être désolidarisées aisément par ledit passager (1) en situation d'urgence.

## Patentansprüche

1. Vorrichtung (10) zum Antreiben eines Passagiers (1), wobei die genannte Vorrichtung einen Körper (10a) umfasst mit:
- einer Plattform (11) mit mehreren Bereichen (11a, 11b), die zum Aufnehmen der Füße oder Schuhe des genannten Passagiers (1) ausgelegt sind; und
- einer Schubgruppe (12) mit mindestens einer Schubsubgruppe (12a, 12b), die jeweils mindestens ein Turbostrahltriebwerk (12a1, 12a2, 12a3, 12a4, 12a5, 12a6, 12b1, 12b2) umfasst;
- wobei die Gasstromausstoßrichtung jedes der genannten mindestens einen Turbostrahltriebwerke (12a1, 12a2, 12a3, 12a4, 12a5, 12a6, 12b1, 12b2) orientierbar ist und beim Nennbetrieb entlang einer Achse (AL12a, AL12b) im Wesentlichen normal zur Plattform (11) orientiert ist;
- wobei der genannte Körper (10a) der Vorrichtung (10) Tragmittel (14) der Schubgruppe (12) aufweist, die mit der Plattform (11) zusammenwirken und zum Stützen der genannten Schubgruppe (12) und zum Minimieren des Abstands zwischen einer in eine Mittelebene (PM) der Plattform (11) projizierten und durch den Schwerpunkt (CG10) des Körpers (10a) der Antriebsvorrichtung (10) verlaufenden Achse und der genannten Gasstromausstoßrichtung (AL12a, AL12b) jedes der genannten mindestens einen Turbostrahltriebwerke (12a1, 12a2, 12a3, 12a4, 12a5, 12a6, 12b1, 12b2) ausgelegt sind;
- wobei die Bereiche (11a, 11b) zum Aufnehmen der Füße oder Schuhe des genannten Passagiers (1) auf beiden Seiten der genannten Schubgruppe (12) positioniert sind.

2. Vorrichtung (10) nach dem vorherigen Anspruch, bei der die mindestens eine Schubsubgruppe (12a, 12b) ein erstes (12a1, 12a2, 12a3, 12a4, 12a5, 12a6) und ein zweites (12b1, 12b2) Turbostrahltriebwerk aufweist, deren jeweilige Gasstromausstoßrichtungen (AL12a, AL12b) normal zur Plattform sind.

3. Vorrichtung nach einem der vorherigen Ansprüche, bei der die Bereiche (11a) zum Aufnehmen der Füße oder Schuhe des genannten Passagiers (1) Haltemittel in Form von Fußstützen (11d) oder eines Paares von Fixierschuhen oder -stiefeln aufweisen.

4. Vorrichtung nach einem der vorherigen Ansprüche, bei der der Körper (10a) der genannten Vorrichtung (10) auskragende Mittel (17) aufweist, die mit der Plattform (11) und/oder den Tragmitteln (14) zusammenwirken und zum Verhindern eines Stoßes oder direkten Kontakts zwischen dem Boden und der Schubgruppe (12) der Vorrichtung (10) ausgelegt sind.

5. Vorrichtung nach Anspruch 2, bei der das erste (12al, 12a2, 12a3, 12a4, 12a5, 12a6) und das zweite (12bl, 12b2) Turbostrahltriebwerk der mindestens einen Schubsubgruppe (12) gegenläufig angeordnet sind.

6. Vorrichtung nach einem der Ansprüche 2 oder 5, bei der die Tragmittel (14) so ausgelegt sind, dass sie das erste (12a1, 12a2, 12a3, 12a4, 12a5, 12a6) und das zweite (12b1, 12b2) Turbostrahltriebwerk der mindestens einen Schubsubgruppe (12a, 12b) parallel zueinander halten.

7. Vorrichtung nach einem der vorherigen Ansprüche, die eine Verkleidung (13u) aufweist, die mit der Plattform (11) zusammenwirkt oder mit der genannten Plattform (11) eine einzige physische Einheit bildet und zum Verhindern eines direkten Kontakts zwischen der Schubgruppe (12) und dem Passagier (1) ausgelegt ist.

8. Vorrichtung nach dem vorherigen Anspruch, bei der die Verkleidung (13u) einen Rost (18) aufweist, der zum teilweisen Verdecken des Fluideinlasses des mindestens einen Turbostrahltriebwerks (12a1, 12a2, 12a3, 12a4, 12a5, 12a6, 12b1, 12b2) der mindestens einen Schubsubgruppe (12) und so zum Verhindern des Ansaugens von Fremdkörpern durch den genannten Fluideinlass ausgelegt ist.

9. Vorrichtung nach einem der vorherigen Ansprüche, bei der die Schubgruppe ferner kurs- (19a, 19b) und/oder Fluglage-(19c, 19d)-korrigierende Sekundärtriebwerke aufweist.

10. Vorrichtung nach einem der vorherigen Ansprüche, die ferner einen Tank für einen Treibstoff in Fluidverbindung mit dem mindestens einen Turbostrahltriebwerk (12a1, 12a2, 12a3, 12a4, 12a5, 12a6, 12b1, 12b2) der mindestens einen Schubsubgruppe (12a, 12b) umfasst, um das genannte mindestens eine Turbostrahltriebwerk (12a1, 12a2, 12a3, 12a4, 12a5, 12a6, 12b1, 12b2) mit Treibstoff zu versorgen, wobei der genannte Tank mit dem Körper (10a) der Antriebsvorrichtung (10) oder dem Körper des Passagiers (1) zusammenwirkt.

11. Vorrichtung nach einem der vorherigen Ansprüche, die eine Mensch-Maschine-Sollwertsschnittstelle (60, 11c, 11d), die eine Gestik des Passagiers (1) in einen Sollwert umsetzt, Mittel zur Verarbeitung des genannten erzeugten Sollwerts und zur Erzeugung eines Leistungsbefehls des mindestens einen Turbostrahltriebwerks (12a1, 12a2, 12a3, 12a4, 12a5, 12a6, 12b1, 12b2) der mindestens einen Schubsubgruppe (12a, 12b) auf der Basis des genannten erzeugten Sollwerts aufweist, wobei der genannte Leistungsbefehl des genannten mindestens einen Turbostrahltriebwerks (12a1, 12a2, 12a3, 12a4, 12a5, 12a6, 12b1, 12b2) über Kommunikationsmittel zur Schubgruppe (12) geleitet wird.

12. Vorrichtung nach dem vorherigen Anspruch in Abhängigkeit von Anspruch 9, bei der die Verarbeitungsmittel einen Leistungsbefehl der kurs- (19a, 19b) oder Fluglage-(19c, 19d)-korrigierenden Sekundärtriebwerke auf der Basis des genannten von der Mensch-Maschine-Sollwertsschnittstelle (60, 11c, 11d) erzeugten Sollwerts erzeugen, wobei der genannte Leistungsbefehl der genannten kurs- (19a, 19b) und/oder Fluglage-(19c, 19d)-korrigierenden Sekundärtriebwerke über Kommunikationsmittel geleitet wird.

13. Vorrichtung nach dem vorherigen Anspruch, die einen Fluglage- und/oder Flugbahnsensor aufweist, der mit dem im Wesentlichen im Schwerpunkt (CG10) der Vorrichtung (10) positionierten Körper (10a) der Vorrichtung (10) und mit den Verarbeitungsmitteln zusammenwirkt, wobei Letztere den Leistungsbefehl des mindestens einen Turbostrahltriebwerks (12a1, 12a2, 12a3, 12a4, 12a5, 12a6, 12bl, 12b2) der mindestens einen Schubsubgruppe (12a, 12b) oder der kurs-(19a, 19b) und/oder Fluglage-(19c, 19d)-korrigierenden Sekundärtriebwerke auf der Basis einer vom Fluglage- und/oder Flugbahnsensor gelieferten Information zusammen mit einem von der Mensch-Maschine-Schnittstelle (60, 11c, 11d) erzeugten Sollwert erzeugen.

14. Vorrichtung nach einem der Ansprüche 11 bis 13, bei der die Mensch-Maschine-Sollwertsschnittstelle ferner einen Winkelmesssensor aufweist, der den Winkel misst, den ein Handgelenk des Passagiers (1) in Bezug auf die Längsachse des betreffenden Unterarms in Bezug auf eine Referenzposition beschreibt, nach der die Hand des Passagiers (1) mit dem genannten Unterarm ausgerichtet ist.

15. Vorrichtung nach Anspruch 10, bei der der Tank für einen Treibstoff in Fluidverbindung mit dem mindestens einen Turbostrahltriebwerk (12a1, 12a2, 12a3, 12a4, 12a5, 12a6, 12b1, 12b2) der mindestens einen Schubsubgruppe (12a, 12b) zum Versorgen derselben mit Treibstoff eine flexible Hülle und ein Geschirr zum Zusammenwirken mit dem Körper des Passagiers (1) aufweist, dessen Befestigungen so vorgesehen sind, dass sie von dem genannten Passagier (1) in einer Notsituation leicht gelöst werden können.

## Claims

1. Device (10) for propelling a passenger (1), said device comprising a body (10a) including:
- a platform (11) including several surfaces (11a, 11 b) arranged to receive the feet or footwear of said passenger (1); and
- a thrust unit (12) comprising at least one thrust sub-unit (12a, 12b) each comprising at least one turbojet (12a1, 12a2, 12a3, 12a4, 12a5, 12a6, 12b1, 12b2);
- the gaseous flow ejection direction of each of said at least one turbojet (12a1, 12a2, 12a3, 12a4, 12a5, 12a6, 12b1, 12b2) being orientable and, in nominal operation, oriented along an axis (AL12a, AL12b) substantially normal to the platform (11);
- said body (10a) of the device (10) including support means (14) of the thrust unit (12) cooperating with the platform (11) and being arranged to support said thrust unit (12) and minimize the distance between an axis projected in a median plane (PM) of the platform (11) and passing through the centre of gravity (CG10) of the body (10a) of the propulsion device (10) and said gaseous flow ejection direction (AL12a, AL12b) of each of said at least one turbojet (12a1, 12a2, 12a3, 12a4, 12a5, 12a6, 12b1, 12b2);
- the surfaces (11a, 11b) for receiving the feet or footwear of said passenger (1) being positioned on either side of said thrust unit (12).

2. Device (10) according to the preceding claim, for which the at least one thrust sub-unit (12a, 12b) includes a first (12a1, 12a2, 12a3, 12a4, 12a5, 12a6) and a second (12b1, 12b2) turbojets the respective gaseous flow ejection directions (AL12a, AL12b) of which are normal to the platform.

3. Device according to any one of the preceding claims, for which the surfaces (11a) for receiving the feet or footwear of said passenger (1) include holding means in the form of a foot rest (11d) or a pair of fastening shoes or boots.

4. Device according to any one of the preceding claims, for which the body (10a) of said device (10) includes projecting means (17) cooperating with the platform (11) and/or the support means (14) and being arranged to prevent any impact or direct contact between the ground and the thrust unit (12) of the device (10).

5. Device according to claim 2, for which the first (12a1, 12a2, 12a3, 12a4, 12a5, 12a6) and the second (12b1, 12b2) turbojets of the at least one thrust sub-unit (12) are arranged contra-rotating.

6. Device according to one of claims 2 or 5, for which the support means (14) are arranged to hold the first (12a1, 12a2, 12a3, 12a4, 12a5, 12a6) and the second (12b1, 12b2) turbojets of the at least one thrust sub-unit (12a, 12b) parallel.

7. Device according to any one of the preceding claims, including a fairing (13u), cooperating with the platform (11) or constituting with said platform (11) one and the same physical entity, arranged to prevent any direct contact between the thrust unit (12) and the passenger (1).

8. Device according to the preceding claim, for which the fairing (13u) includes a grid (18) arranged to partially conceal the fluid intake of the at least one turbojet (12a1, 12a2, 12a3, 12a4, 12a5, 12a6, 12b1, 12b2) of the at least one thrust sub-unit (12) and thus prevent the intake of foreign bodies via said fluid intake.

9. Device according to any one of the preceding claims, for which the thrust unit also includes secondary thrusters for course (19a, 19b) and/or attitude (19c, 19d) correction.

10. Device according to any one of the preceding claims, also comprising a fuel tank in fluid communication with the at least one turbojet (12a1, 12a2, 12a3, 12a4, 12a5, 12a6, 12b1, 12b2) of the at least one thrust sub-unit (12a, 12b) to supply said at least one turbojet (12a1, 12a2, 12a3, 12a4, 12a5, 12a6, 12b1, 12b2) with fuel, said tank cooperating with the body (10a) of the propulsion device (10) or the body of the passenger (1).

11. Device according to any one of the preceding claims, including a human-machine setpoint interface (60, 11c, 11d) translating a gesture of the passenger (1) into a setpoint, means for processing said setpoint produced and for generating a power command of the at least one turbojet (12a1, 12a2, 12a3, 12a4, 12a5, 12a6, 12b1, 12b2) of the at least one thrust sub-unit (12a, 12b) from said setpoint produced, said power command of said at least one turbojet (12a1, 12a2, 12a3, 12a4, 12a5, 12a6, 12b1, 12b2) being routed to the thrust unit (12) by communication means.

12. Device according to the preceding claim when it is dependent on claim 9, for which the processing means generate a power command of the secondary thrusters for course (19a, 19b) or attitude (19c, 19d) correction from said setpoint produced by the human-machine setpoint interface (60, 11c, 11d), said power command of said secondary thrusters for course (19a, 19b) and/or attitude (19c, 19d) correction being routed by communication means.

13. Device according to the preceding claim, including an attitude and/or trajectory sensor cooperating with the body (10a) of the device (10) substantially positioned at the centre of gravity (CG10) of the latter and with the processing means, the latter generating the power command of the at least one turbojet (12a1, 12a2, 12a3, 12a4, 12a5, 12a6, 12b1, 12b2) of the at least one thrust sub-unit (12a, 12b) or of the secondary thrusters for course (19a, 19b) and/or attitude (19c, 19d) correction from an item of information delivered by the attitude and/or trajectory sensor jointly with a setpoint produced by the human-machine interface (60, 11c, 11d).

14. Device according to any one of claims 11 to 13, for which the human-machine setpoint interface also includes an angular measurement sensor measuring the angle described by a wrist of the passenger (1) with regard to the longitudinal axis of the forearm in question with respect to a reference position according to which the hand of the passenger (1) is aligned with said forearm.

15. Device according to claim 10, for which the fuel tank, in fluid communication with the at least one turbojet (12a1, 12a2, 12a3, 12a4, 12a5, 12a6, 12b1, 12b2) of the at least one thrust sub-unit (12a, 12b) to supply the latter with fuel, includes a flexible shell and a harness to cooperate with the body of the passenger (1) the fastenings of which are intended to be easily detached by said passenger (1) in an emergency situation.
